# EUROPÄISCHE PATENTSCHRIFT

(11) **EP 1 647 578 B1**
(45) Veröffentlichungstag und Bekanntmachung des Hinweises auf die Patenterteilung: **21.02.2007**
(21) Anmeldenummer: 05021842.9
(22) Anmeldetag: 06.10.2005
(51) Int. Cl.: C08L 83/04

(54) **Siliconkautschuk-Zusammensetzung enthaltend unbehandeltes Aluminiumhydroxid als Füllstoff**
Silicone rubber composition comprising an aluminum hydroxide filler being not surface treated
Composition de caoutchouc à base de silicone élastomère comprenant de l'aluminum hydroxydé non traité comme charge

(30) Priorität: 14.10.2004 DE 102004050129
(43) Veröffentlichungstag der Anmeldung: 19.04.2006
(73) Patentinhaber: Wacker Chemie AG, 81737 München (DE)
(72) Erfinder: Kuhn, Arvid, Dr., 84453 Mühldorf (DE); Leitermann, Christine, 84489 Burghausen (DE)
(74) Vertreter: Renner, Thomas

(56) Entgegenhaltungen:
- EP-A- 0 801 111
- EP-A- 0 928 008
- DE-A1- 19 740 631

## Beschreibung

Diese Erfindung betrifft Siliconkautschuk-Zusammensetzungen für Hochspannungsisolatoren. Genauer betrifft die Erfindung additions- oder peroxidvernetzende Siliconkautschukzusammensetzungen, die Aluminiumhydroxid als Füllstoff enthalten, wobei unbehandeltes Aluminiumhydroxid verwendet wird.

Aluminiumhydroxid, auch bekannt als Aluminiumtrihydrat (ATH), ist ein stöchiometrisch definiertes, kristallines Aluminiumhydroxid, welches aus Niederschlägen durch Zugabe von Basen zu Aluminiumsalzlösungen oder aus Bauxit erhältlich ist, oder ein Aluminiumoxidhydrat, in der Technik häufig Tonerdehydrat genannt, das die Zusammensetzung Al₂O₃·H₂O oder Al₂O₃·3 H₂O aufweist und somit als Oxidhydrat angesehen und als amorpher Bestandteil von mineralischen Aluminiumvorkommen, wie beispielsweise Bauxit oder Alumogel, erhalten werden kann.

Siliconkautschuk-Zusammensetzungen, die Aluminiumhydroxidpulver enthalten, sind bereits bekannt. Es ist auch bekannt, dass solche Zusammensetzungen durch ein Härtungsmittel, gegebenenfalls in der Wärme, zu einem Siliconkautschuk aushärten. Härtungsmittel kann beispielsweise ein Peroxid oder die Kombination aus einem Übergangsmetall enthaltenden Hydrosilylierungskatalysator und einem Methylhydrogensiloxygruppen enthaltenden Organosiloxan sein. Dem Fachmann ist bekannt, dass sich durch Zusatz einer ausreichenden Menge Aluminiumhydroxidpulver zu Siliconkautschukzusammensetzungen einige Eigenschaften des vernetzten Kautschuks, die für die Verwendung als Hochspannungsisolator erforderlich sind, wie beispielsweise Lichtbogenbeständigkeit und Kriechstromfestigkeit, erheblich verbessern. Dem Fachmann ist weiterhin bekannt, dass sich die Verarbeitungseigenschaften der unvernetzten Zusammensetzung und die mechanischen Eigenschaften des vernetzten Kautschuks verschlechtern, je mehr Aluminiumhydroxid enthalten ist. Bei Anwendung als Hochspannungsisolator, insbesondere bei Freiluftanwendungen, muss aber der vernetzte Kautschuk eine ausreichende mechanische Festigkeit aufweisen, da eine ständige mechanische Belastung beispielsweise durch Wind und Witterungseinflüsse wie auch durch Vogelfraß gegeben ist.

Der Stand der Technik beschreibt Siliconkautschukzusammensetzungen, die Aluminiumhydroxid enthalten, dessen Oberfläche beispielsweise mit einem Silan, Silazan oder Siloxan behandelt wurde, mit dem Ziel, verschiedene Eigenschaften der Zusammensetzung oder des Kautschuks, wie beispielsweise Verarbeitbarkeit und Haltbarkeit der unvernetzten Zusammensetzung, dielektrische und auch mechanische Eigenschaften des vernetzten Kautschuks, zu verbessern.

So beschreibt die Patentschrift US 3,965,065 B1, dass die Verwendung von Aluminiumhydroxid in härtbaren Organopolysiloxanzusammensetzungen zwar die Lichtbogenbeständigkeit zunächst verbessert. Diese Beständigkeit verschlechtert sich aber deutlich, wenn das Material einige Zeit Feuchtigkeit ausgesetzt ist. Beschrieben wird ein Verfahren zur Herstellung einer verbesserten elastomerbildenden Zusammensetzung, bei dem ein Gemisch aus Aluminiumhydroxid und einem härtbaren Organopolysilöxan mindestens 30 Minuten auf über 100°C erhitzt wird, wodurch ein Elastomer mit besseren elektrischen Eigenschaften erhalten wird.

Die Verwendung von oberflächenbehandeltem Aluminiumhydroxid wurde bereits in den 1970er Jahren erwähnt. Die Patentschrift US 4,217,466 B1 beschreibt Isolatoren, deren Schirme aus einem Siliconelastomer bestehen, das oberflächenbehandeltes Aluminiumhydroxid als Füllstoff enthält. Bevorzugte Behandlungsreagenzien sind beispielsweise Vinylsilane.

Die Patentschrift US 5,691,407 B1 beansprucht additionsvernetzende Siliconkautschukzusammensetzungen, die oberflächenbehandeltes Aluminiumhydroxid enthalten. Das Reagenz zur Oberflächenbehandlung kann ein Silan oder Silazan, eine Titanverbindung oder ein Polysiloxan sein. Die Verwendung von oberflächenbehandeltem Aluminiumhydroxid führt zu verbesserten elektrischen Eigenschaften des Siliconkautschuks bei der Verwendung in Hochspannungsisolatoren. Die Verwendung von oberflächenbehandeltem Aluminiumhydroxid ist bevorzugt, es kann aber auch unbehandeltes Aluminiumhydroxid in Kombination mit Hexamethyldisilazan eingesetzt werden.

Die europäische Patentschrift EP 0 787 772 B1 beschreibt härtbare Siliconkautschukzusammensetzungen, die oberflächenbehandeltes Aluminiumhydroxid enthalten aber keine weiteren verstärkenden Füllstoffe und trotzdem gute mechanische Festigkeit und elektrische Eigenschaften aufweisen. Härtungsmittel ist ein Peroxid. Die guten mechanischen Eigenschaften werden im wesentlichen dadurch erreicht, dass das Aluminiumhydroxidpulver behandelt ist mit einem Silan oder Siloxan, das Alkenylgruppen und Alkoxy- oder Hydroxygruppen aufweist, wie beispielsweise Vinyltrimethoxysilan oder vinylhaltige Organosiloxane mit SiOH oder Si-OR Endgruppen. Das Aluminiumhydroxidpulver kann dabei mit dem Reagenz vorbehandelt sein oder die Behandlung kann in situ bei der Herstellung der Siliconkautschukzusammensetzung erfolgen. Vergleichsbeispiele, in denen unbehandeltes Aluminiumhydroxid als Füllstoff verwendet wird, zeigen deutlich schlechtere Reißfestigkeiten und Weiterreißwiderstände. Ein Kautschuk, der 150 Teile Aluminiumhydroxidpulver, bezogen auf 100 Teile Polydiorganosiloxan, enthält, hat eine Reißfestigkeit von 5.1 MPa und einen Weiterreißwiderstand von 13 N/mm, wenn das Aluminiumhydroxid erfindungsgemäß behandelt wurde, und eine Reißfestigkeit von nur 1.7 MPa und einen Weiterreißwiderstand von 8 N/mm mit unbehandeltem Aluminiumhydroxid.

Die europäische Patentschrift EP 0 808 868 B2 beschreibt härtbare Siliconkautschukzusammensetzungen, die mit einem Organosilan oder Organosilazan oberflächenbehandeltes Aluminiumhydroxidpulver enthalten. Das Silan bzw. Silazan kann dabei auch Alkenylgruppen enthalten, wie beispielsweise Vinyltrimethoxysilan oder Tetramethyl-divinyl-disilazan. Das Härtungsmittel kann beispielsweise ein Peroxid sein oder eine Kombination aus einem Hydrosilylierungskatalysator und einem Si-H Gruppen enthaltenden Polyorganosiloxan. EP 0 808 868 B2 führt weiterhin aus, dass Siliconkautschukzusammensetzungen, die herkömmliches Aluminiumhydroxid enthalten, nicht stabil sind, weil das Aluminiumhydroxid Wasser absorbiert und sich dadurch die elektrischen Eigenschaften verschlechtern. Die Behandlung des Aluminiumhydroxidpulvers mit einem Organosilan oder Organosilazan wird als essentiell beschrieben, um gute Wasserbeständigkeit und gute elektrische Eigenschaften zu erzielen.

Im europäischen Patent EP 0 801 111 B1 wird eine thermisch härtbare Siliconkautschukzusammensetzung beschrieben, die Polyorganosiloxan, Siliciumdioxidpulver, Aluminiumhydroxidpulver, Benzotriazol, das Reaktionsprodukt aus einer Platinverbindung und 3,5-Dimethyl-1-hexin-3-ol und ein Peroxid enthält. Solche Zusammensetzungen, die 1.0 bis 50 Gewichtsteile Aluminiumhydroxid bezogen auf 100 Gewichtsteile Polyorganosiloxan enthalten, weisen verbesserte Flammfestigkeit und elektrische Eigenschaften auf im Vergleich mit Zusammensetzungen, die nur Platinverbindungen oder Platinverbindungen in Kombination mit beispielsweise Titandioxid enthalten.

Auch im europäischen Patent EP 0 808 875 B1 werden Siliconkautschukzusammensetzungen mit guter Flammfestigkeit beschrieben, die Aluminiumhydroxid und Platinverbindungen enthalten können, wobei diese Zusammensetzungen vor dem Aushärten noch ausreichende Fließfähigkeit aufweisen sollen, um gut verarbeitbar zu sein. Diese Zusammensetzungen enthalten Polyorganosiloxan, pyrogene Kieselsäure, oberflächenbehandeltes Zinkcarbonat, ein Si-H Gruppen enthaltendes Polyorganosiloxan und einen Platinkatalysator. Aluminiumhydroxid und eine weitere Platinverbindung werden optional zugegeben. Wird Aluminiumhydroxid verwendet, so ist es oberflächenbehandelt.

Die Oberflächenbehandlung des Zinkcarbonats und des Aluminiuinhydroxids ist dabei entscheidend für das Erreichen des Ziels der Erfindung.

Das Patent US 5,668,205 B1 beansprucht additionsvernetzende Siliconkautschukzusammensetzungen, die Aluminiumhydroxid enthalten und zusätzlich zur Verbesserung der elektrischen Eigenschaften ein trimethylsilyl-endständiges Dimethylpolysiloxan. Weiterhin beansprucht werden peroxidische Siliconkautschukzusammensetzungen mit Aluminiumhydroxid, wobei ein Großteil der Organopolysiloxane Trivinyl- oder Divinylsilylendgruppen trägt, und gegebenenfalls einem Polysiloxan ohne ungesättigte Gruppen. Solche Zusammensetzungen können im Spritzguß verarbeitet werden und härten zu Siliconkautschuken aus, die verbesserte elektrische Eigenschaften aufweisen, insbesondere wenn ein aus der Zusammensetzung hergestellter Isolator in einer Umgebung mit hoher Luftverschmutzung eingesetzt wird. Das Aluminiumhydroxid kann unbehandelt oder oberflächenbehandelt sein. Derartige Polymere mit Di- bzw. Trivinylendgruppen sind in der Siliconchemie keine gängigen Einsatzstoffe. Ihre Herstellung ist teuer und aufwendig und ihr Einsatz damit nicht wünschenswert.

Die Patentschrift US 6,063,487 B1 beschreibt additions- oder peroxidisch vernetzende Siliconkautschukzusammensetzungen, die Aluminiumhydroxid enthalten, wobei das Aluminiumhydroxid einen Gehalt an wasserlöslichen Natriumionen von bis zu 0.01 Gew. % hat, einen pH-Wert von 6.5 - 8.0 und eine elektrische Leitfähigkeit bis zu 50 µS/cm, gemessen als 30 Gew. % Suspension in Wasser. Aus diesen Zusammensetzungen hergestellte Isolatoren haben verbesserte elektrische Eigenschaften und niedrige Wasseraufnahme. Bessere Ergebnisse werden erreicht, wenn das Aluminiumhydroxid durch Oberflächenbehandlung hydrophobiert ist.

Das Patent US 5,977,216 B1 beschreibt, dass Aluminiumhydroxid selbst keine verstärkenden Eigenschaften hat. Weil aber, um die gewünschten elektrischen Eigenschaften zu erhalten, sehr hohe Füllgrade an Aluminiumhydroxid in den Siliconkautschukzusammensetzungen notwendig sind, resultieren daraus Siliconkautschuke mit geringer mechanischer Festigkeit. Beschrieben werden härtbare Siliconkautschukzusammensetzungen, die Aluminiumhydroxid enthalten, das mit Vinylsilazanen, beispielsweise Tetramethyldivinyldisilazan, oder Vinylalkoxysilanen, beispielsweise Vinyltrimethoxysilan, derart behandelt ist, dass auf der Oberfläche 1 x 10⁻⁶ bis 2 x 10⁻⁴ mol Vinylgruppen pro Gramm Aluminiumhydroxid vorhanden sind. Das derartig mit Vinylgruppen modifizierte Aluminiumhydroxid hat dann verstärkende Eigenschaften, so dass trotz der hohen Füllgrade die Festigkeit des Kautschuks nicht leidet. Die Reißfestigkeit der Kautschuke mit oberflächenbehandeltem Aluminiumhydroxid liegt in den erfindungsgemäßen Beispielen zwischen 45 und 58 kgf/cm² (entsprechend 4.41 - 5.69 N/mm²), bei den Beispielen mit nicht behandeltem Aluminiumhydroxid zwischen 18 und 25 kgf/cm² (1.76 - 2.45 N/mm²).

In der europäischen Offenlegungsschrift EP 0 928 008 A2 werden Siliconkautschukzusammensetzungen für Hochspannungsisolatoren beschrieben, bei denen das Aluminiumhydroxid in situ oberflächenbehandelt wird. Bei der Herstellung der Zusammensetzungen wird unbehandeltes Aluminiumhydroxid in Kombination mit einem Organosilanhaftvermittler eingesetzt. Dadurch wird die Oberfläche des Aluminiumhydroxids hydrophöbiert, wodurch die Wechselwirkung des Aluminiumhydroxids mit dem Polysiloxan verbessert wird und damit auch die Dispergierbarkeit und verstärkende Wirkung des Aluminiumhydroxids.

Das Patent US 6,106,954 B1 beschreibt additionsvernetzende Organopolysiloxanzusammensetzungen, die oberflächenbehandeltes Aluminiumhydroxid enthalten, wobei das Behandlungsreagenz ein Organosilan oder Organosilazan ist (oder ein Teilhydrolysat dieser Reagenzien), das frei ist von ungesättigten Gruppen. Aluminiumhydroxid wird zur Verbesserung der isolierenden Eigenschaften im Siliconkautschuk verwendet. Da Aluminiumhydroxid an sich aber hygroskopisch ist, verliert der Siliconkautschuk in feuchter Umgebung die isolierenden Eigenschaften. Durch die Verwendung von Aluminiumhydroxid, das wie oben beschrieben oberflächenbehandelt ist, behält der Siliconkautschuk seine isolierenden Eigenschaften auch unter feuchten Bedingungen bei.

Die europäische Patentschrift EP 1 037 946 B1 beschreibt additionsvernetzende Siliconkautschukzusammensetzungen, die Aluminiumhydroxid und als weiteres Metalloxid Zinkoxid sowie gegebenenfalls Titandioxid enthalten. Mit dieser Zusammensetzung werden Nachteile des in der Anmeldung beschriebenen Standes der Technik wie geringe Lagerstabilität und zu geringe Kriechstromfestigkeit überwunden. Das Aluminiumhydroxid wird vorzugsweise in situ durch ein Organosilazan oberflächenbehandelt.

Zwar ergeben sich aus dem Stand der Technik bei der Verwendung von oberflächenbehandeltem Aluminiumhydroxidpulver eine Reihe von Vorteilen, wie beispielsweise Verarbeitbarkeit und Haltbarkeit der unvernetzten Zusammensetzung, mechanische und dielektrische Eigenschaften des vernetzten Kautschuks, geringere Wasseraufnahme. Ein erheblicher Nachteil derartiger Zusammensetzungen ist aber, dass die Oberflächenbehandlung des Aluminiumhydroxidpulvers ein zusätzlicher aufwendiger, und damit teurer Arbeitsschritt ist. Die Oberflächenbehandlung des Aluminiumhydroxidpulvers erfolgt bevorzugt mit Behandlungsmitteln, wie beispielsweise Silanen, die als gesundheitsschädlich oder toxisch eingestuft sind oder bei der Verarbeitung toxische Substanzen abspalten können. Damit sind entsprechende Sicherheitsmaßnahmen notwendig. Dementsprechend ist es von Vorteil, wenn man eine Siliconkautschukzusammensetzung mit unbehandeltem Aluminiumhydroxid herstellen kann, die die gleichen guten Eigenschaften aufweist, wie die im Stand der Technik beschriebenen Zusammensetzungen mit oberflächenbehandeltem Aluminiumhydroxid.

Überraschenderweise wurde gefunden, dass bei geeigneten Siliconkautschuk-Zusammensetzungen auch Aluminiumhydroxid verwendet werden kann, das nicht oberflächenbehandelt ist, die Zusammensetzungen im unvernetzten Zustand trotzdem eine gute Lagerstabilität aufweisen und der vernetzte Siliconkautschuk trotzdem die hohen Anforderungen der dielektrischen Prüfungen erfüllt, die für Hochspannungsisolatoren notwendig sind. Dabei werden auch bei Verwendung von unbehandeltem Aluminiumhydroxid am vernetzten Kautschuk Reißdehnungen von mindestens 100 %, Reißfestigkeiten von mindestens 2 N/mm² und Weiterreißwiderstände von mindestens 10 N/mm erhalten.

Gegenstand der Erfindung sind Siliconkautschukzusammensetzungen für Hochspannungsisolatoren, enthaltend
(A) 100 Gewichtsteile von mindestens einem Diorganopolysiloxan mit der allgemeinen Formel (1):

   Rₐ¹R_{b}²SiO_{(4-a-b)/2} (1)

   wobei
   - R¹: einen unsubstituierten oder halogensubstituierten einwertigen Kohlenwasserstoffrest mit 1 bis 20 Kohlenstoffatomen, der frei von aliphatisch ungesättigten Gruppen ist,
   - R²: einen unsubstituierten oder halogensubstituierten einwertigen Kohlenwasserstoffrest, der aliphatisch ungesättigt ist, jedes Molekül im Durchschnitt mindestens zwei solche an Siliciumatome gebundene ungesättigte Gruppen aufweist und
   - a, b: unabhängig von einander positive Zahlen
   bedeuten,
   mit der Maßgabe, dass 1 ≤ a < 3, 0 < b ≤ 1 und 1 < a + b ≤ 3 ist,
(B) 1 - 100 Gewichtsteile, bezogen auf 100 Gewichtsteile (A), hochdisperse Kieselsäure mit einer spezifischen Oberfläche, gemessen mit der BET Methode, von 50 - 400 m²/g, und einem Q4-Anteil an SiO_{4/2} Einheiten bezogen auf die Summe aus Q4, Q3 und Q2 von mindestens 80 %,
(C) 50 - 300 Gewichtsteile, bezogen auf 100 Gewichtsteile (A) mindestens einem nicht durch einen Vorbehandlungsschritt oberflächenmodifizierten Aluminiumhydroxidpulver mit einer spezifischen Oberfläche, gemessen nach der BET Methode, von 0.1 - 20 m²/g und einer durchschnittlichen Partikelgröße von 0.05 - 20 µm,
(D) Vernetzungsmittel in einer Menge, die ausreicht, um die Zusammensetzung zu härten, wobei dieses Vernetzungsmittel ausgewählt wird aus der Gruppe enthaltend
   organisches Peroxid, Hydroperoxid oder eine Mischung aus verschiedenen organischen Peroxiden oder Hydroperoxiden
   oder
   eine Kombination aus einem Organohydrogenpolysiloxan mit der allgemeinen Formel (2)

   R_{c}³H_{d}SiO_{(4-c-d)/2} (2)

   wobei
   - R³: einen substituierten oder unsubstituierten einwertigen Kohlenwasserstoffrest, der nicht aliphatisch ungesättigt ist, mit der Maßgabe, dass jedes Molekül im Durchschnitt mindestens drei solche an Siliciumatome gebundene Wasserstoffatome aufweist, und
   - c,d: unabhängig von einander positive Zahlen
   bedeuten,
   mit der Maßgabe, dass 1 ≤ c < 3, 0 < d ≤ 1 und 1 < c + d ≤ 3 ist,
   und
   einem Übergangsmetall enthaltenden
   Hydrosilylierungskatalysator,
   mit der Maßgabe, dass der vernetzte Kautschuk Reißdehnungen von mindestens 100 %, Reißfestigkeiten von mindestens 2 N/mm² und Weiterreißwiderstände von mindestens 10 N/mm aufweist.

Der Bestandteil (A) der erfindungsgemäßen Siliconkautschukzusammensetzung ist ein Diorganopolysiloxan oder eine Mischung von Diorganopolysiloxanen der allgemeinen Formel (1):

Rₐ¹R_{b}²SiO_{(4-a-b)/2} (1)

R¹ ist ein substituierter oder unsubstituierter einwertiger Kohlenwasserstoffrest, der keine aliphatisch ungesättigten Gruppen enthält. R² ist ein substituierter oder unsubstituierter einwertiger Kohlenwasserstoffrest, der aliphatisch ungesättigt ist, wobei jedes Molekül im Durchschnitt mindestens zwei solche an Siliciumatome gebundene ungesättigte Gruppen aufweist. Die Indizes a und b sind positive Zahlen, die die Gleichungen 1 ≤ a < 3, 0 < b ≤ 1 und 1 < a + b ≤ 3 erfüllen.

Insbesondere bedeutet R¹ einen einwertigen, von aliphatischen Kohlenstoff-Kohlenstoff-Mehrfachbindungen freien, SiC-gebundenen, gegebenenfalls substituierten Kohlenwasserstoffrest mit 1 bis 18 Kohlenstoffatomen.

Beispiele für Reste R¹ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für substituierte Reste R¹ sind Halogenalkylreste, wie der 3,3,3-Trifluor-n-propylrest, der 2,2,2,2',2',2'-Hexafluor-isopropylrest, der Heptafluorisopropylrest und Halogenarylreste, wie der o-, m- und p-Chlorphenylrest, sowie alle für R¹ oben genannten Reste, die vorzugsweise mit Mercaptogruppen, epoxyfunktionellen Gruppen, Carboxygruppen, Ketogruppen, Enamingruppen, Aminogruppen, Aminoethylaminogruppen, iso-Cyanatogruppen, Aryloxygruppen, Hydroxygruppen und Halogengruppen substituiert sein können.

Bevorzugt handelt es sich bei dem Rest R¹ um einen einwertigen Kohlenwasserstoffrest mit 1 bis 6 Kohlenstoffatomen, wobei der Methylrest besonders bevorzugt ist.

R² bedeutet insbesondere einen einwertigen, SiC-gebundenen Kohlenwasserstoffrest mit aliphatischer Kohlenstoff-Kohlenstoff-Mehrfachbindung.

Beispiele für Reste R² sind Alkenylreste, wie der Vinyl-, 5-Hexenyl-, Cyclohexenyl-, 1-Propenyl-, Allyl-, 3-Butenyl- und 4-Pentenylrest, und Alkinylreste, wie der Ethinyl-, Propargyl-und 1-Propinylrest.

Bevorzugt handelt es sich bei dem Rest R² um Alkenylreste, wobei der Vinylrest besonders bevorzugt ist.

In einer bevorzugten Ausführungsform ist R¹ eine Methylgruppe und R² eine Vinylgruppe. Die Struktur der Diorganopolysiloxane (A) kann linear oder verzweigt sein, wobei eine lineare Struktur bevorzugt ist. Die Viskosität der Diorganopolysiloxane (A) bei 25°C (bestimmt nach DIN 53018) liegt zwischen 1.000 mPa·s und 50.000.000 mPa·s. In einer bevorzugten Ausführungsform liegt die Viskosität der Diorganopolysiloxane (A) zwischen 500.000 und 40.000.000 mPa·s, noch bevorzugter zwischen 2.000.000 und 30.000.000 mPa.s und damit im Bereich der üblicherweise in hochtemperatur-vernetzenden Kautschuken (HTV) verwendeten Polysiloxane.

In einer anderen Ausführungsform liegt die Viskosität der Diorganopolysiloxane (A) bei 25°C (bestimmt nach DIN 53018) bevorzugt zwischen 1.000 mPa.s und 100.000 mPa·s, noch bevorzugter zwischen 5.000 und 50.000 mPa·s. Polysiloxane in diesem Viskositätsbereich werden üblicherweise für Flüssigsiliconkautschuke (liquid silicone rubber, LSR) verwendet.

Die Diorganopolysiloxane (A) können beispielsweise vinyl-terminierte Polydimethylsiloxane, vinyl-terminierte Polydimethyl-polymethylvinyl-siloxane oder trimethylsilylterminierte Polydimethyl-polymethylvinyl-siloxane sein. Die Komponente (A) kann aus einem einzigen Diorganopolysiloxan bestehen oder aus Mischungen von zwei oder mehr Diorganopolysiloxanen.

Die Komponente (B) ist hochdisperse Kieselsäure. Die Komponente (B) wird als verstärkender Füllstoff eingesetzt, der dem vernetzten Siliconkautschuk ausreichende mechanische Festigkeit verleiht.

Beispiele für verstärkende Füllstoffe, also Füllstoffe mit einer BET-Oberfläche von mindestens 50 m²/g, sind pyrogen hergestellte Kieselsäure, gefällte Kieselsäure oder Silicium-Aluminium-Mischoxide mit einer BET-Oberfläche von mehr als 50 m²/g. Die genannten Füllstoffe können hydrophobiert sein, beispielsweise durch Behandlung mit Organosilanen, -silazanen oder -siloxanen oder durch Veretherung von Hydroxylgruppen zu Alkoxygruppen. Bevorzugt sind pyrogen hergestellte Kieselsäuren mit einer BET-Oberfläche von mindestens 100 m²/g.

Die erfindungsgemäßen Massen enthalten verstärkende Füllstoffe in Mengen von vorzugsweise 1 bis 100 Gewichtsteile, bevorzugt 3 bis 50 Gewichtsteile bezogen auf 100 Gewichtsteile der Komponente (A). Bei einer Menge von unter einem Gewichtsteil ist die mechanische Festigkeit des vernetzten Kautschuks unzureichend, bei mehr als 100 Gewichtsteilen wird der Kautschuk spröde.

Es kann eine Art von Füllstoff, es kann aber auch ein Gemisch von mindestens zwei Füllstoffen eingesetzt werden.

Die Oberflächenbehandlung der Kieselsäure kann mit Siliciumverbindungen erfolgen, die gesättigte oder ungesättigte Gruppen enthalten oder mit Mischungen solcher Siliciumverbindungen. Bei der Verwendung von ungesättigte Gruppen enthaltenden Siliciumverbindungen weist die behandelte Kieselsäure entsprechende ungesättigte Gruppen an der Oberfläche auf. Unbehandelte Kieselsäure kann bei der Herstellung der Siliconkautschukzusammensetzungen in Kombination mit derartigen Siliciumverbindungen oder hydroxy-terminierten Diorganosiloxan-Oligomeren verwendet werden. Die Diorganosiloxan-Oligomere können wiederum ungesättigte Gruppen enthalten.

Beispiele für hydroxy-terminierte Diorganosiloxan-Oligomere sind Dimethylhydroxysiloxy-terminierte Dimethylsiloxan Oligomere, Dimethylhydroxysiloxy-terminierte Dimethylsiloxan-Methylvinylsiloxan Copolymer-Oligomere oder Hydroxy-terminierte Methylvinylsiloxan Oligomere. Bei den ungesättigte Gruppen enthaltenden Siloxan-Oligomeren liegt der Anteil an solche ungesättigte Gruppen tragenden Siloxyeinheiten bevorzugt zwischen 1 und 50 mol-%, besonders bevorzugt zwischen 4 und 20 mol-%. Die Viskosität der Oligomere liegt bevorzugt zwischen 5 und 500 mPa·s, besonders bevorzugt zwischen 15 und 60 mPa·s. Bei der Oberflächenbehandlung der Kieselsäure werden die Beharidlungsreagenzien bevorzugt so gewählt, dass zumindest ein Teil der verwendeten Siliciumverbindungen oder Siloxanoligomere ungesättigte Gruppen enthalten. Bevorzugt ist ein Anteil an ungesättigte Gruppen tragenden Behandlungsreagenzien von mindestens 10 Gew.-%, besonders bevorzugt mindestens 30 Gew.-%. Ist die Oberfläche der Kieselsäure mindestens teilweise mit ungesättigten Gruppen modifiziert, so verbessern sich die mechanischen Eigenschaften der vernetzten Siliconkautschukzusammensetzungen auch dann, wenn erfindungsgemäß unbehandeltes Aluminiumhydroxidpulver verwendet wird.

Die Kieselsäure kann mit ²⁹Si MAS-Festkörper NMR-Spektroskopie durch ihren Si-OH Gehalt charakterisiert werden. Die SiO_{4/2} - Einheiten der Kieselsäure zeigen unterschiedliche chemische Verschiebungen abhängig davon, wie viele am Siliciumatom gebundene OH-Gruppen (Silanol-Gruppen) vorhanden sind. Dafür unterscheidet man bei den SiO_{4/2} Einheiten Q4- (kein OH), Q3-(eine OH-Gruppe am Siliciumatom) und Q2- (zwei OH Gruppen am Siliciumatom) Einheiten. Das Verhältnis der Peakintensitäten dieser Signale ist ein Maß für den Silanolgehalt der Kieselsäure. Bei Überlappung der Peaks kann ihr Verhältnis durch Deconvulation des Signals unter Verwendung der literaturbekannten Verschiebungen ermittelt werden. Die chemische Verschiebung der Q4-Einheiten beträgt etwa -110 ppm, die der Q3-Einheiten etwa -100 ppm und die der Q2-Einheiten etwa -90 ppm, bezogen auf die Verschiebung von TMS, wie beispielsweise in C. C. Liu, G. E. Maciel, *J. Am. Chem. Soc.* **1996,** *118,* 5103 beschrieben.

Eine durch einen Hydrophobierungsschritt oberflächen-modifizierte, unabhängig ob durch Vorbehandlung oder in situ Behandlung, Kieselsäure weist einen Anteil an Q4 Einheiten, bezogen auf die Summe aus Q2, Q3 und Q4 Einheiten, von mindestens 80 % auf. Je höher der Anteil an Q4 Einheiten ist, desto geringer ist der Silanolgehalt und umso besser ist die Kieselsäure hydrophobiert. Je besser die Kieselsäure hydrophobiert ist, desto besser ist das Verstrammungsverhalten der unvernetzten Zusammensetzung bei Lagerung. In einer bevorzugten Ausführungsform liegt der Anteil an Q4 Einheiten daher bei 90 bis 99 mol-%.

Bei einer in situ Behandlung der Kieselsäure kann die Bestimmung des Anteils an Q4 Einheiten erfolgen, nachdem die polymeren Bestandteile mit einem geeigneten organischen Lösungsmittel vom Füllstoff abgetrennt wurden.

Die Komponente (C) der erfindungsgemäßen Zusammensetzung ist entscheidend, um dem vernetzten Kautschuk die für die Verwendung als Isolator notwendigen elektrischen Eigenschaften, wie Lichtbogenbeständigkeit und Kriechstromfestigkeit zu verleihen. Die Komponente (C) ist Aluminiumhydroxidpulver, auch bekannt unter dem Namen Aluminiumtrihydrat (ATH) und wird üblicherweise durch die allgemeine Formel (3) oder (4) beschrieben:

Al(OH)₃ (3)

Al₂O₃ · 3 H₂O (4)

Das Aluminiumhydroxid kann dabei auch Mischoxide wie Aluminiumoxidhydrat AlO(OH) enthalten. Üblicherweise wird in Silicorikautschukzusammensetzungen Aluminiumhydroxid verwendet, das, beispielsweise mit Silanen oder Silazanen, oberflächenbehandelt ist. In der erfindungsgemäßen Zusammensetzung wird dagegen Aluminiumhydroxid eingesetzt, das nicht oberflächenbehandelt wurde. Derartiges unbehandeltes Aluminiumhydroxid ist beispielsweise erhältlich unter den Handelsnamen Apyral 40 CD (Nabaltec GmbH, Schwandorf/Deutschland), Martinal OL-107 oder Martinal OL-104 (beide Martinswerk GmbH, Bergheim/Deutschland) oder Micral 632 (J. M. Huber Corporation, Edison NJ/U.S.A.).

Das eingesetzte Aluminiumhydroxidpulver hat eine durchschnittliche Partikelgröße von 0.05 - 20 µm, bevorzugt 1 - 15 µm. Die spezifische Oberfläche, gemessen mit der BET Methode, des Aluminiumhydroxidpulvers beträgt 0.1 - 20 m²/g, bevorzugt 1 - 10 m²/g. Bei durchschnittlichen Partikelgrößen über 20 µm bzw. spezifischen Oberflächen unter 0.1 m²/g sind die Partikel so groß, dass das Aluminiumhydroxidpulver unter Umständen nicht mehr homogen im Siliconkautschuk verteilt ist. Bei durchschnittlichen Partikelgrößen unter 0.05 µm bzw. spezifischen Oberflächen über 20 m²/g kann sich der Gehalt an Aluminiumhydroxid verstärkt auf die mechanischen Eigenschaften des Kautschuks auswirken.

Von der Komponente (C) werden 50 - 300 Gewichtsteile, bezogen auf 100 Gewichtsteile der Komponente (A) eingesetzt. Bevorzugt sind 80 - 250 Gewichtsteile, noch bevorzugter 90 - 200 Gewichtsteile. Bei zu großen Anteilen Aluminiumhydroxid verschlechtern sich Verarbeitbarkeit der Zusammensetzung und mechanische Eigenschaften des vernetzten Kautschuks, bei zu geringen Anteilen Aluminiumhydroxid erhält man nur eine unzureichende Verbesserung der elektrischen Eigenschaften des Kautschuks. Komponente (C) kann als ein einziges Aluminiumhydroxidpulver eingesetzt werden oder es können Kombinationen von unterschiedlichen Aluminiumhydroxidpulvern eingesetzt werden, beispielsweise mit unterschiedlichen Partikelgrößen oder spezifischen Oberflächen oder mit unterschiedlichen Morphologien.

Komponente (D) ist ein Vernetzungsmittel, das in einer Menge zugegeben wird, die ausreicht, um die Zusammensetzung, gegebenenfalls bei erhöhter Temperatur, auszuhärten. Bevorzugt sind Vernetzungsmittel, die die Zusammensetzung erst bei erhöhter Temperatur aushärten, da sich dadurch die Lagerfähigkeit der unvernetzten Zusammensetzung verbessert. Komponente (D) kann beispielsweise ein organisches oder anorganisches Peroxid sein oder eine Kombination aus einem Organohydrogenpolysiloxan und einem zumindest ein Übergangsmetall enthaltenden Hydrosilylierungskatalysator. Ist die Komponente (D) ein Peroxid, so ist es ausgewählt aus der Gruppe der Dialkylperoxide, Diarylperoxide, Alkylarylperoxide, Aralkylperoxide und Hydroperoxide. Als Komponente (D) kann ein einzelnes Peroxid oder Hydroperoxid eingesetzt werden oder eine Kombination aus verschiedenen Peroxiden oder Peroxiden mit Hydroperoxiden. Der Anteil an Komponente (D), wenn (D) ein Peroxid ist, beträgt bevorzugt 0,1 bis 80 Gewichtsteile und besonders bevorzugt 0,5 bis 40 Gewichtsteile, jeweils bezogen auf 100 Gewichtsteile von (A).

Erfolgt die Vernetzung der erfindungsgemäßen Massen mittels freier Radikale, werden als Vernetzungsmittel organische Peroxide, die als Quelle für freie Radikale dienen, eingesetzt. Beispiele für organische Peroxide sind Acylperoxide, wie Dibenzoylperoxid, Bis-(4-chlorbenzoyl)-peroxid, Bis-(2,4-dichlorbenzoyl)-peroxid und Bis-(4-methylbenzoyl)-peroxid; Alkylperoxide und Arylperoxide, wie Di-tert.-butylperoxid, 2,5-Bis-(tert.-butylperoxy)-2,5-dimethylhexan, Dicumylperoxid und 1,3-Bis-(tert.-butylperoxy-isopropyl)-benzol; Perketale, wie 1,1-Bis-(tert.-butylperoxy)-3,3,5-trimethylcyclohexan; Perester, wie Diacetylperoxydicarbonat, tert.-Butylperbenzoat, Tert.-butylperoxy-isopropylcarbonat, Tert.-butylperoxy-isononanoat, Dicyclohexylperoxydicarbonat und 2,5-Dimethylhexan-2,5-diperbenzoat.

Es kann eine Art von organischem Peroxid, es kann auch ein Gemisch von mindestens zwei verschiedenen Arten von organischen Peroxiden eingesetzt werden.

Ist die Kautschukzusammensetzung additionsvernetzend, so besteht die Komponente (D) aus einer Kombination aus einem Organohydrogenpolysiloxan und einem zumindest ein Übergangsmetall enthaltenden Hydrosilylierungskatalysator. Das Organohydrogenpolysiloxan hat dabei die allgemeine Formel (2)

R_{c}³H_{d}SiO_{(4-c-d)/2} (2)

wobei R³ ein substituierter oder unsubstituierter einwertiger Kohlenwasserstoffrest ist, der nicht aliphatisch ungesättigt ist. Jedes Molekül weist im Durchschnitt mindestens drei solche an Siliciumatome gebundene Wasserstoffatome auf. Die Indizes a und b sind positive Zahlen, mit der Maßgabe, dass die Gleichungen 1 ≤ c < 3, 0 < d ≤ 1 und 1 < c + d ≤ 3 erfüllt sind.

Beispiele für R³ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für substituierte Reste R³ sind Halogenalkylreste, wie der 3,3,3-Trifluor-n-propylrest, der 2,2,2,2',2',2'-Hexafluor-isopropylrest, der Heptafluorisopropylrest und Halogenarylreste, wie der o-, m- und p-Chlorphenylrest, sowie alle für R³ oben genannten Reste, die vorzugsweise mit Mercaptogruppen, epoxyfunktionellen Gruppen, Carboxygruppen, Ketogruppen, Enamingruppen, Aminogruppen, Aminoethylaminogruppen, iso-Cyanatogruppen, Aryloxygruppen, Hydroxygruppen und Halogengruppen substituiert sein können.

Vorzugsweise wird das Organohydrogenpolysiloxan der allgemeinen Formel (2) so zugegeben, dass ein Überschuss Si-H bezogen auf Vinylgruppen im Kautschuk entsteht.

Als die Anlagerung von Si-gebundenem Wasserstoff an aliphatische Mehrfachbindung fördernde Katalysatoren können auch bei dem erfindungsgemäßen Verfahren die gleichen Katalysatoren eingesetzt werden, die auch bisher zur Förderung der Anlagerung von Si-gebundenem Wasserstoff an aliphatische Mehrfachbindung eingesetzt werden konnten. Bei den Katalysatoren handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. PtCl₄, H₂PtCl₆*6H₂O, Na₂PtCl₄*4H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungs-produkten aus H₂PtCl₆*6H₂O und Cyclohexanon, Platin-Vinyl-siloxankomplexe, wie Platin-1,3-Divinyl-1,1,3,3-tetramethyl- disiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-di-chlorid, Cyclooctadien-Platindichlorid, Norbornadien-Platindichlorid, Gamma-picolin-Platindichlorid, Cyclopentadien-Platindichlorid, sowie Umsetzungsprodukte von Platintetrachlorid mit Olefin und primärem Amin oder sekundärem Amin oder primärem und sekundärem Amin, wie beispielsweise das Umsetzungsprodukt aus in 1-Octen gelöstem Platintetrachlorid mit sec.-Butylamin oder Ammonium-Platinkomplexe.

Der Katalysator wird bei dem erfindungsgemäßen Verfahren vorzugsweise in katalytischen Mengen eingesetzt.

Besonders bevorzugt sind solche Hydrosilylierungskatalysatoren, die bei der Lagertemperatur des unvernetzten Kautschuks, bevorzugt unter 40°C, inert sind, bei erhöhten Temperaturen die Zusammensetzung dagegen ausreichend schnell katalysieren.

Beispiele für derartige Hydrosilylierungskatalysatoren sind Platinverbindungen, ausgewählt aus der Gruppe bestehend aus Verbindungen der Formel (5) 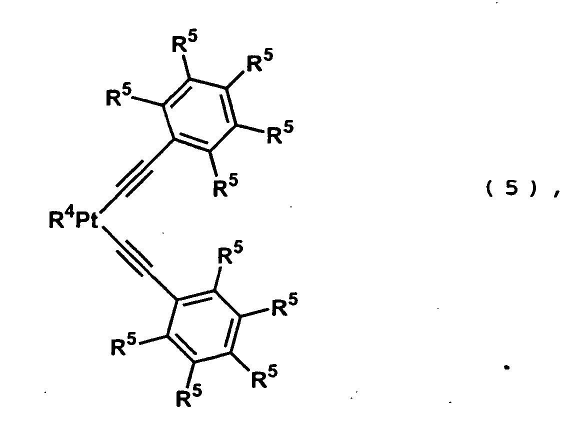 und/oder oligomeren oder polymeren Verbindungen, die aus Struktureinheiten der allgemeinen Formel (6) 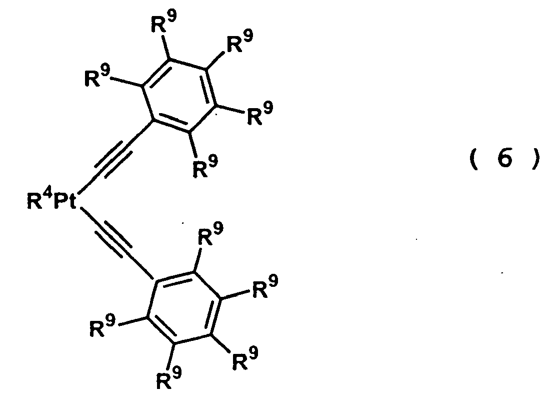 und gegebenenfalls Struktureinheiten der allgemeinen Formel (7)

R¹¹ᵣSiO_{(4-r)/2} (7)

zusammengesetzt sind,
wobei
- R⁴: ein gegebenenfalls substituiertes Dien bedeutet, das durch mindestens eine π-Bindung mit Platin verbunden ist und eine unverzweigte oder eine verzweigte Kette mit 4 bis 18 Kohlenstoffatomen oder einen cyclischen Ring mit 6 bis 28 Kohlenstoffatomen darstellt,
- R⁵: gleich oder verschieden sein kann und Wasserstoffatom, Halogenatom, -SiR⁶₃, -OR⁸ oder einwertige, gegebenenfalls substituierte Kohlenwasserstoffreste mit 1 bis 24 Kohlenstoffatomen bedeutet, mit der Maßgabe, dass in den Verbindungen der Formel (5) mindestens ein Rest R⁵ die Bedeutung von -SiR⁶₃ hat,
- R⁶: gleich oder verschieden sein kann und Wasserstoff, Halogenatom, -OR⁸ oder einwertige, gegebenenfalls substituierte Kohlenwasserstoffreste mit 1 bis 24 Kohlenstoffatomen bedeutet,
- R⁸: gleich oder verschieden sein kann und Wasserstoffatom, -siR⁶₃ oder ein einwertiger gegebenenfalls substituierter Kohlenwasserstoffrest mit 1 bis 20 Kohlenstoffatomen ist,
- R⁹: gleich oder verschieden sein kann und Wasserstoffatom, Halogenatom, -SiR⁶₃, -SiR⁶₍₃₋ₜ₎ [R¹⁰SiR¹¹ₛO_{(3-s)/2}]ₜ, -OR⁸ oder einwertige, gegebenenfalls substituierte Kohlenwasserstoffreste mit 1 bis 24 Kohlenstoffatomen bedeutet, mit der Maßgabe, dass in Formel (6) mindestens ein Rest R⁹ die Bedeutung von -SiR⁶₍₃₋ₜ₎ [R¹⁰SiR¹¹ₛO_{(3-s)/2}]ₜ hat,
- R¹⁰: gleich oder verschieden sein kann und Sauerstoff oder zweiwertige, gegebenenfalls substituierte Kohlenwasserstoffreste mit 1 bis 24 Kohlenstoffatomen, die über Sauerstoffatom an das Silicium gebunden sein können, bedeutet,
- **R¹¹**: gleich oder verschieden sein kann und Wasserstoff oder einen organischen Rest bedeutet,
- r: 0, 1, 2 oder 3 ist,
- s: 0, 1, 2 oder 3 bedeutet und
- t: 1, 2 oder 3 ist.

Von dem Begriff Organopolysiloxane sollen sowohl polymere, oligomere wie auch dimere Siloxane mit umfasst werden.

Falls es sich bei R⁴ um ein substituiertes Dien bzw. bei den Resten R⁵, R⁶, R⁷, R⁸, R⁹ und R¹⁰ um substituierte Kohlenwasserstoffreste handelt, sind als Substituenten Halogenatome, wie F, Cl, Br und J, Cyanoreste, -NR⁸₂, Heteroatome, wie O, S, N und P, sowie Gruppen ―OR⁸ bevorzugt, wobei R⁸ die oben genannte Bedeutung hat.

Beispiele für **R⁴** sind Diene, wie 1,3-Butadien, 1,4-Diphenyl-1,3-butadien, 1,3-Cyclohexadien, 1,4-Cyclohexadien, 2,4-Hexadien, 1,4-Hexadien, 1,5-Hexadien, 2,5-Dimethyl-2,4-Hexadien, α-und γ-Terpinen, (R)-(+)-4-Isopropenyl-1-methyl-1-cyclohexen, (S)-(-)-4-Isopropenyl-1-methyl-1-cyclohexen, 4-Vinyl-1-cyclohexen, 2,5-Heptadien, 1,5-Cyclooctadien, 1-Chlor-1,5-Cyclooctadien, 1,5-Dimethyl-1,5-cyclooctadien, 1,6-Dimethyl-1,5-cyclooctadien, 1,5-Dichlor-1,5-cyclooctadien, 5,8-Dihydro-1,4-dioxocin, η⁴-1,3,5,7-Cyclooctatetraen, η⁴-1,3,5-Cycloheptatrien, η⁴-1-Fluor-1,3,5,7-Cyclooctatetraen, η⁴-1,2,4,7-Tetramethyl-1,3,5,7-cyclooctatetraen, 1,8-Cyclotetradecadien, 1,9-Cyclohexadecadien, 1,13-Cyclotetracosadien, η⁴-1,5,9-cyclododecatrien, η⁴-1,5,10-Trimethyl-1,5,9-cyclododecatrien, η⁴-1,5,9,13-Cyclo-hexadecatetraen, Bicyclo[2.2.1]hepta-2,5-dien, 1,3-Dodecadien, Methylcyclopentadien dimer, 4,7-Methylen-4,7,8,9-tetrahydroinden, Bicyclo[4.2.2]deca-3,9-dien-7,8-dicarbonsäureanhydrid, Bicyclo[4.2.2]deca-3,9-dien-7,8-dicarbonsäurealkylester und Bicyclo[4.2.2]deca-3,7,9-trien-7,8-dicarbonsäurealkylester.

Bevorzugt handelt es sich bei Dien R⁴ um 1,5-Cyclooctadien, 1,5-Dimethyl-1,5-cyclooctadien, 1,6-Dimethyl-1,5-Cyclooctadien, 1-Chlor-1,5-Cyclooctadien, 1,5-Dichlor-1,5-Cyclooctadien, 1,8-Cyclotetradecadien, 1,9-Cyclohexadecadien, 1,13-Cyclotetracosadien, Bicyclo[2.2.1]hepta-2,5-dien, 4-Vinyl-1-cyclohexen, und η ⁴-1,3,5,7-cyclooctatetraen, wobei 1,5-Cyclooctadien, Bicyclo[2.2.1]hepta-2,5-dien, 1,5-Dimethyl-1,5-cyclooctadien, 1,6-Dimethyl-1,5-cyclooctadien besonders bevorzugt sind.

Beispiele für **R⁵** sind Alkylreste, wie der Methyl-, Ethyl-, n-Propyl-, iso-Propyl-, 1-n-Butyl-, 2-n-Butyl-, iso-Butyl-, tert. Butyl-, n-Pentyl-, iso-Pentyl, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4- Trimethylpentylrest, Nonylreste, wie der n-Nonylrest, Decylreste, wie der n-Decylrest, Cycloalkylreste, wie Cyclopropyl-, Cyclopentyl-, Cyclohexyl-, Cycloheptylreste und Methylcyclohexylreste, ungesättigte Reste, wie der Allyl-, 5-Hexenyl-, 7-Octenyl-, Cyclohexenyl- und Styrylrest, Arylreste, wie Phenylreste, o-,m-,p-Tolylreste, Xylylreste und Ethylphenylreste, Aralkylreste, wie der Benzylrest und der α-und β-Phenylethylrest, sowie Reste der Formel -C(R¹)=CR¹₂; weitere Beispiele für R⁵ sind -OR⁸-Reste, wie Hydroxy-, Methoxy-, Ethoxy-, Isopropoxy-, Butoxy- und Phenoxyreste. Beispiele für halogenierte Reste R⁵ sind Halogenalkylreste, wie der 3,3,3-Trifluor-n-propylrest, der 2,2,2,2',2',2',-Hexafluorisopropylrest, der Heptafluorisopropylrest und Halogenarylreste, wie der o-,m-, und p-Chlorphenylrest. Beispiele für R⁵ gleich Silylreste sind Trimethylsilyl-, Ethyldimethylsilyl-, Methoxydimethylsilyl-, n-Propyldimethylsilyl-, Isopropyldimethylsilyl-, n-Butyldimethylsilyl-, tert-Butyldimethylsilyl-, Octyldimethylsilyl-, Vinyldimethylsilyl-, Phenyldimethylsilyl-, Diphenylmethylsilyl-, Hydroxypropyldimethylsilyl-, Methylvinylphenylsilyl- und Methoxypropylsilylreste.

Bevorzugt handelt es sich bei Rest R⁵ um Wasserstoffatom, Hydroxy-, Methoxyreste und Kohlenwasserstoffreste mit 1 bis 8 Kohlenstoffatomen sowie Trimethylsilyl-, Ethyldimethylsilyl-, Butyldimethylsilyl-, Octyldimethylsilylreste, wobei Wasserstoffatom, der Methylrest und der Trimethylsilylrest besonders bevorzugt sind.

Bevorzugt handelt es sich bei Rest R⁶ um einwertige Kohlenwasserstoffreste mit 1 bis 24 Kohlenstoffatomen, wie z.B. die im Zusammenhang mit Rest R⁵ genannten Beispiele, substituierte Kohlenwasserstoffreste, wie Hydroxypropyl-, und Chlorpropylrest und -OR⁸- Reste, wie Hydroxy-, Methoxy- und Ethoxyreste, wobei Methyl-, Ethyl-, Butyl-, Octyl-, Methoxy-, Ethoxy- und Hydroxypropylreste besonders bevorzugt sind.

Beispiele für Rest R⁸ sind die für Rest R⁵ angegebenen Reste. Bevorzugt handelt es sich bei R⁸ um Wasserstoffatom, Alkylreste und Arylreste, wobei Wasserstoffatom, der Methyl- und der Ethylrest besonders bevorzugt sind.

Beispiele für Rest **R⁹** sind die für Rest **R⁵** angegebenen Reste sowie 1-Trimethylsiloxypropyl-3-dimethylsilyl-, 1-Ethyldimethylsiloxypropyl-3-dimethylsilyl-, 1-Methoxydimethylsiloxypropyl-3-dimethylsilyl- und Pentamethyldisiloxanylreste.

Bevorzugt handelt es sich bei **R⁹** um einwertige Reste, wie z.B. Wasserstoffatom, Methyl-, Methoxy-, Trimethylsilyl-, Ocytldimethylsilyl-, Dimethylmethoxysilyl-, 1-Trimethylsiloxypropyl-3-dimethylsilyl- und Hydroxypropyldimethylsilylreste sowie um mehrwertige Reste, wie -C₂H₄-, -Si (Me)₂-O-Si (Me)₂O_{1/2}, -Si (Me) ₂-CH₂-CH₂-CH₂-O-Si (Me) ₂O_{1/2}, -Si(Me)₂-O-Si(Me)O_{2/2}, -Si(Me)₂-O-SiO_{3/2}, -Si(Me)₂-CH₂-CH₂₋Si(Me)₂O_{1/2} und -Si (Me)₂-CH₂-CH₂-Si (Me) O_{2/2}, wobei Me die Bedeutung von Methylrest hat.

Beispiele für Reste R¹⁰ sind Sauerstoffatom sowie -CH₂-, -C₂H₄-, -C₃H₆-, -C₄H₈-, -C₆H₁₂-, -C₆H₄-, -CH₂CH(CH₃)-C₆H₄-CH(CH₃)CH₂- und - (CH₂)₃O-, wobei Sauerstoffatom, -C₂H₄-, -C₃H₆- und -(CH₂)₃O-besonders bevorzugt sind.

Beispiele für Rest R¹¹ sind Wasserstoffatom sowie die für Rest R¹ und Rest R² angegebenen Beispiele.

Bevorzugt handelt es sich bei R¹¹ um einwertige Kohlenwasserstoffreste mit 1 bis 12 Kohlenstoffatomen, wobei Methyl-, Ethyl-, Phenyl- und Vinylreste besonders bevorzugt sind.

Beispiele der Einheiten der Formel (7) sind SiO_{4/2}-, (Me)₃SiO_{1/2-}, Vi(Me)₂SiO_{1/2}-, Ph(Me)₂SiO_{1/2}-, (Me)₂SiO_{2/2}-, Ph (Me) SiO_{2/2}-, Vi (Me) SiO_{2/2}-, H (Me) SiO_{2/2}-, MeSiO_{3/2}-, PhSiO_{3/2}-, ViSiO_{3/2}-, (Me)₂(MeO)SiO_{1/2}- und OH(Me)₂SiO_{1/2}-, wobei (Me)₃SiO_{1/2}-, Vi (Me)₂SiO_{1/2}-, (Me)₂SiO_{2/2}-, Ph (Me) SiO_{2/2}-, Vi (Me) SiO_{2/2}- und Me₂ (MeO) SiO_{1/2}MeSiO_{2/2}- bevorzugt und (Me) ₃SiO_{1/2}-, Vi (Me)₂SiO_{1/2-}, (Me)₂SiO_{2/2}- und Vi (Me) SiO_{2/2}- besonders bevorzugt sind mit Me gleich Methylrest, Vi gleich Vinylrest und Ph gleich Phenylrest.

Wird als Bestandteil (D) ein Hydrosilylierungskatalysator nach Formel (5) bis (7) eingesetzt, so handelt es sich bevorzugt um Bis(alkinyl)(1,5-cyclooctadien)platin-, Bis(alkinyl)(bicyclo[2.2.1]hepta-2,5-dien)platin-, Bis(alkinyl)(1,5-dimethyl-1,5-cyclooctadien)platin- und Bis(alkinyl)(1,6-dimethyl-1,5-cyclooctadien)platin-Komplexe.

Neben den Bestandteilen (A) bis (D) können optional weitere Bestandteile in die Zusammensetzung eingearbeitet werden.

Als optionaler Bestandteil (E) kann ein Inhibitor verwendet werden, der die Vernetzungsgeschwindigkeit regelt. Als die Anlagerung von Si-gebundenem Wasserstoff an aliphatische Mehrfachbindung bei Raumtemperatur verzögernde Mittel, so genannte Inhibitoren, können auch bei den erfindungsgemäßen Zusammensetzungen alle Inhibitoren verwendet werden, die auch bisher für den gleichen Zweck verwendet werden konnten.

Beispiele für Inhibitoren sind 1,3-Divinyl-1,1,3,3-tetramethyldisiloxan, Benzotriazol, Dialkylformamide, Alkylthioharnstoffe, Methylethylketoxim, organische oder siliciumorganische Verbindungen mit einem Siedepunkt von mindestens 25°C bei 1012 mbar (abs.) und mindestens einer aliphatischen Dreifachbindung, wie 1-Ethinylcyclohexan-1-ol, 2-Methyl-3-butin-2-ol, 3-Methyl-1-pentin-3-ol, 2,5-Dimethyl-3-hexin-2,5-diol und 3,5-Dimethyl-1-hexin-3-ol, 3,7-Dimethyl-oct-1-in-6-en-3-ol, eine Mischung aus Diallylmaleinat und Vinylacetat, Maleinsäuremonoester, und Inhibitoren wie die Verbindung der Formel HC=C-C (CH₃) (OH) -CH₂-CH₂-CH=C (CH₃)_{2'} beispielsweise erhältlich unter dem Handelsnamen "Dehydrolinalool" (BASF AG, Ludwigshafen/Deutschland).

Bevorzugt als Bestandteil (E) sind Ethinylcyclohexanol (ECH), Dehydrolinalool, 3-Methyldodecinol oder ein Diorganosiloxan-Oligomer, das eine durchschnittliche Kettenlänge von bis zu 50 Siloxyeinheiten aufweist und endständig 3-Methyl-3-hydroxy-but-1-in-4-oxy-Gruppen trägt. Besonders bevorzugt sind Ethinylcyclohexanol und das endständig 3-Methyl-3-hydroxy-but-1-in-4-oxy-Gruppen tragende Diorganosiloxan-Oligomer.

Als optionaler Bestandteil (F) können Zusätze verwendet werden, die eine weitere Verbesserung der elektrischen Eigenschaften, der Hitzebeständigkeit oder der Flammfestigkeit bewirken. Diese Zusätze können beispielsweise Metalloxide oder Metallhydroxide sein, wie Antimontrioxid, Ceroxid, Magnesiumoxid, Magnesiumhydroxid, Titandioxid, Zinkoxid, Zirkoniumdioxid oder Metall- oder Übergangsmetallverbindungen, wie Verbindungen des Palladiums oder Platins, gegebenenfalls in Kombination mit organischen Verbindungen, die die Aktivität dieser Verbindungen in Hydrosilylierungsreaktionen regulieren, oder Kombinationen solcher Zusätze.

Bevorzugt bei den Metalloxiden ist Titandioxid. In einer bevorzugten Ausführungsform besteht der Bestandteil (F) aus dem Umsetzungsprodukt einer Platinverbindung oder eines Platinkomplexes mit einer Organosiliciumverbindung, die über Kohlenstoff an das Silicium gebundenen basischen Stickstoff aufweist oder aus der Kombination eines derartigen Umsetzungsprodukts mit Titandioxid. Beispiele für derartige Platinverbindungen oder Platinkomplexe sind die beispielsweise in der europäischen Patentschrift **EP 0 359 252 B1** beschriebenen H₂[PtCl₆]·6 H₂O, Platin-Olefin Komplexe, Platin-Alkohol Komplexe, Platin-Alkoholat Komplexe, Platin-Ether Komplexe, Platin-Vinylsiloxan Komplexe, insbesondere Platin-1,3-Divinyl-1,1,3,3-tetramethyldisiloxankomplexe oder die beispielsweise in der europäischen Patentschrift **EP 1 077 226 B1** beschriebenen Cyclooctadien-Komplexe des Platins mit Acetylidliganden, insbesondere Bis(alkinyl)(1,5-cyclooctadien)platin-Komplexe. Bevorzugt sind Platin-1,3-Divinyl-1,1,3,3-tetramethyldisiloxankomplexe oder Cyclooctadien-Komplexe des Platins mit Acetylidliganden.

Beispiele für die Organosiliciumverbindungen, die über Kohlenstoff an Silicium gebundenen basischen Stickstoff aufweisen, sind N-(2-Aminoethyl)-3-aminopropyltrimethoxysilan, N-(2-Aminoethyl)-3-aminopropyltriethoxysilan, N-(2-Aminoethyl)-3-aminopropylmethyldimethoxysilan, 3-Aminopropyltrimethoxysilan, 3-Aminopropyltriethoxysilan, N-(Cyclohexyl)-3-aminopropyltrimethoxysilan, N-(2-Aminoethyl)-3-aminopropyltris(trimethylsiloxy)silan, 1,2-Bis[N-(2-aminoethyl)-3-aminopropyl]-1,1,2,2-tetramethyldisiloxan, N,N'-Bis-(3-(trimethoxysilyl)propyl)-1,2-ethandiamin, N,N-Bis(3-(trimethoxysilyl)propyl)-1,2-ethandiamin und N,N'-Bis(3-(trimethoxysilyl)propyl)-harnstoff.

Bevorzugt sind 3-Aminopropyltrimethoxysilan, 3-Aminopropyltriethoxysilan und N,N'-Bis-(3-(trimethoxysilyl)propyl)-1,2-ethandiamin.

Besonders bevorzugt sind N-(2-Aminoethyl)-3-aminopropyltrimethoxysilan und N-(2-Aminoethyl)-3-aminopropyltriethoxysilan.

Bevorzugt enthält die Siliconkautschukzusammensetzung für Hochspannungsisolatoren mindestens 15 ppm, höchstens 500 ppm Stickstoff. Bei Anteilen unter 15 ppm Stickstoff findet man nur eine unzureichende Wirkung, bei Anteilen über 500 ppm wirkt sich der Stickstoffgehalt nachteilig auf die Vernetzung der Zusammensetzung aus.

Als weiterer optionaler Bestandteil (G) können weitere nichtverstärkende Füllstoffe und Pigmente enthalten sein, sofern sie die gewünschten Eigenschaften der Zusammensetzung oder des vernetzten Kautschuks nicht beeinträchtigen. Die weiteren Bestandteile (G) können in Anteilen zwischen 0.001 und 100 Gewichtsteilen, bezogen auf 100 Gewichtsteile (A), enthalten sein. Beispiele für die weiteren Bestandteile (G) sind Russe, Graphit, Quarzmehl, Metallsalze von Carbonsäuren, wie Calciumstearat, Metalloxide oder Mischoxide, wie Eisenoxide, Cobalt-Aluminiumoxid Spinelle, Cobalt-Eisen-Chrom Spinelle, Aluminium-Chrom-Cobalt Spinelle und andere Spinelle, Ceroxid, Chromoxid, Titandioxid und Vanadiumoxid, sowie weiterhin Verarbeitungshilfsmittel, wie beispielsweise nicht-funktionelle Polydimethylsiloxane, hydroxy-terminierte Poly-dimethyl-siloxanöle, hydroxy-terminierte Poly-dimethyl-methylvinylsiloxanöle, Formtrennmittel und Weichmacher.

Die erfindungsgemäße Zusammensetzung kann durch einfaches Mischen der Bestandteile in einem für Siliconkautschuk-Zusammensetzungen üblicherweise verwendeten Mischaggregat (Kneter, Extruder, Zweiwalzenstuhl) hergestellt werden.

Bevorzugt ist eine Herstellung, bei der die Bestandteile (A), (B) und (C) und gegebenenfalls optionale Bestandteile (E), (F) und (G) in einem Kneter innig, gegebenenfalls unter Erwärmen bis zur Homogenität vermischt werden. Nach Austragen der Zusammensetzung aus dem Kneter wird dieses Vorprodukt auf einem Walzwerk mit Bestandteil (D) fertig gestellt, wobei die Temperatur der Zusammensetzung unter der Temperatur bleiben muss, bei der eine Anvernetzung der Zusammensetzung stattfindet. Die optionalen Bestandteile (E), (F) und (G) können statt im ersten Schritt auch erst zusammen mit Bestandteil (D) auf dem Walzwerk zugegeben werden.

In einer bevorzugten Ausführungsform werden zunächst in einem geeigneten Mischaggregat die Bestandteile (A) und (B) zusammen mit einem Oberflächenbehandlungsmittel unter Erwärmen bis zur Homogenität vermischt. Dieses Zwischenprodukt wird dann in einem zweiten Schritt in einem Kneter mit dem Bestandteil (C) und gegebenenfalls optionalen Bestandteilen vermischt und anschließend wie oben auf einem Walzwerk mit Bestandteil (D) und optionalen Bestandteilen fertig gestellt. Weist der Bestandteil (D) eine Zersetzungstemperatur auf, die über der im Kneter erreichten Temperatur liegt, so kann der Bestandteil (D) auch schon im Kneter eingearbeitet werden.

Die erfindungsgemäßen Siliconkautschukzusammensetzungen eignen sich auf Grund ihrer hervorragenden mechanischen und elektrischen Eigenschaften besonders für die Herstellung von Hochspannungsisolatoren oder schwerbrennbaren Kabelummantelungen.

### Beispiele

### Herstellung der Basismischung 1:

In einem Kneter werden 100 Teile eines Dimethylvinylsilyloxy-terminierten Dimethylsiloxan-Methylvinylsiloxan Copolymers, das 99.94 mol-% Dimethylsiloxyeinheiten und 0.06 mol-% Methylvinylsiloxyeinheiten enthält und einen Polymerisationsgrad von etwa 6000 Siloxyeinheiten aufweist, mit 31 Teilen vinylsilan-behandelter Kieselsäure mit einer Oberfläche, gemessen nach der BET Methode, von 300 m²/g bis zur Homogenität vermischt.

### Herstellung der Basismischung 2:

In einem Kneter werden 100 Teile eines Dimethylvinylsilyloxy-terminierten Dimethylsiloxan-Methylvinylsiloxan Copolymers, das 99.94 mol-% Dimethylsiloxyeinheiten und 0.06 mol-% Methylvinylsiloxyeinheiten enthält und einen Polymerisationsgrad von etwa 6000 Siloxyeinheiten aufweist, mit 31 Teilen Kieselsäure mit einer Oberfläche, gemessen nach der BET Methode, von 300 m²/g und 7 Teilen eines Dimethylhydroxysiloxy-terminierten Dimethylsiloxan Oligomers mit einer Viskosität von 40 mPa.s bis zur Homogenität vermischt und zwei Stunden auf 170°C erhitzt.

### Herstellung der Basismischung 3:

In einem Kneter werden 100 Teile eines Dimethylvinylsilyloxy-terminierten Dimethylsiloxan-Methylvinylsiloxan Copolymers, das 99.94 mol-% Dimethylsiloxyeinheiten und 0.06 mol-% Methylvinylsiloxyeinheiten enthält und einen Polymerisationsgrad von etwa 6000 Siloxyeinheiten aufweist, mit 31 Teilen Kieselsäure mit einer Oberfläche, gemessen nach der BET Methode, von 300 m²/g, 5 Teilen eines Dimethylhydroxysiloxy-terminierten Dimethylsiloxan Oligomers mit einer Viskosität von 40 mPa.s und 5 Teilen eines Dimethylhydroxysiloxy-terminierten Dimethylsiloxan-Methylvinylsiloxan Copolymer-Oligomers mit einer Viskosität von 40 mPa.s und einem Methylvinylsiloxy-Gehalt von 10 mol-% bis zur Homogenität vermischt und zwei Stunden auf 170°C erhitzt.

### Vernetzer 1:

Vernetzer 1 ist Dicumylperoxid.

### Vernetzer 2:

Vernetzer 2 ist eine 50 %ige Paste aus 2,5-Dimethyl-2,5-Bis(t-butylperoxy)hexan in Siliconöl.

### Vernetzer 3:

Vernetzer 3 ist ein trimethylsilyloxy-terminiertes Dimethylsiloxy-Methylhydrogensiloxy Copolymer, mit einer mittleren Kettenlänge von 150 Siloxyeinheiten, einem Si-H Gehalt von 0.5 Gew.% und einer Viskosität von 360 mm²/s bei 25°C.

### Katalysator 1:

Katalysator 1 ist eine 0.025 Gew. % Platin enthaltende Lösung eines 1,3-Divinyl-1,1,3,3-tetramethyldisiloxan-Platinkomplex in einem Dimethylvinylsilyloxy-terminierten Polydimethylsiloxan.

### Katalysator 2:

Katalysator 2 ist eine 0.025 Gew. % Platin enthaltende Lösung von 1,5-Cyclooctadien-bis[trimethylsilylphenylethinyl]platin in einem Dimethylvinylsilyloxy-terminierten Polydimethylsiloxan

### Additiv 1:

Das Additiv 1 wird wie folgt hergestellt: 100 Teile eines Dimethylvinylsilyloxy-terminierten Dimethylsiloxan-Methylvinylsiloxan Copolymers, das 20 mol-% Methylvinylsiloxyeinheiten enthält und eine Viskosität bei 25°C von 50.000 mPa.s aufweist, werden in einem Rührwerk mit 50 Teilen pyrogen in der Gasphase erzeugtem Titandioxid homogen vermischt. Dazu werden 25 Teile einer 1 Gew. % Pt (berechnet als Element) enthaltenden Mischung aus einem Platin-Vinylsiloxan-Komplex (bekannt als Karstedt Katalysator; analog Katalysator 1) in einem Dimethylvinylsilyloxy-terminierten Dimethylpolysiloxan mit einer Viskosität bei 25°C von 1400 mPa.s gegeben und bis zur Homogenität gemischt. Zu dieser. Mischung werden 4 Teile N-(2-Aminoethyl)-3-aminopropyltrimethoxysilan gegeben, unter starkem Rühren langsam auf 150°C erhitzt und zwei Stunden bei 150°C gerührt.

### Additiv 2:

Additiv 2 ist eine 50 Gew.%ige Mischung eines Cobalt-Aluminiumoxid-Spinells, erhältlich unter dem Handelsnamen Sicopal blau K 6310 (BASF AG, Ludwigshafen/Deutschland), in der Basismischung 1.

### Additiv 3:

Additiv 3 ist ein Dimethylsiloxan-Methylvinylsiloxan Copolymer-Oligomer, das eine durchschnittliche Kettenlänge von 12 Siloxyeinheiten und einen Methylvinylsiloxy-Gehalt von 8 mol-% aufweist und endständig 3-Methyl-3-hydroxy-but-1-in-4-oxy-Gruppen trägt.

### Beispiel 1:

In einem Kneter werden 100 Teile der Basismischung 2 mit 140 Teilen unbehandeltem Aluminiumhydroxid (Micral 632; J. M. Huber Corporation, Edison NJ/U.S.A.) bis zur Homogenität vermischt.

100 Teile dieser Mischung werden auf einer Walze mit 1.0 Teilen Vernetzer 2 fertig gestellt. Zur Herstellung von Probekörpern wird die Zusammensetzung 15 min bei 170°C verpresst und anschließend 4 Stunden bei 150°C getempert.

### Beispiel 2:

In einem Kneter werden 100 Teile der Basismischung 2 mit 140 Teilen unbehandeltem Aluminiumhydroxid (Micral 632; J. M. Huber Corporation, Edison NJ/U.S.A.) bis zur Homogenität vermischt.

100 Teile dieser Mischung werden auf einer Walze mit 0.035 Teilen Ethinylcyclohexanol als Inhibitor, 3 Teilen Vernetzer 3 und 1 Teil Katalysator 1 fertig gestellt. Zur Herstellung von Probekörpern wird die Zusammensetzung 15 min bei 170°C verpresst.

### Beispiel 3:

In einem Kneter werden 100 Teile der Basismischung 3 mit 140 Teilen unbehandeltem Aluminiumhydroxid (Micral 632; J. M. Huber Corporation, Edison NJ/U.S.A.) bis zur Homogenität vermischt.

100 Teile dieser Mischung werden auf einer Walze mit 1.0 Teilen Vernetzer 2 fertig gestellt. Zur Herstellung von Probekörpern wird die Zusammensetzung 15 min bei 170°C verpresst und anschließend 4 Stunden bei 150°C getempert.

### Beispiel 4:

In einem Kneter werden 100 Teile der Basismischung 2 mit 160 Teilen unbehandeltem Aluminiumhydroxid (Martinal OL 104; Martinswerk GmbH, Bergheim/Deutschland) und 20 Teilen eines Dimethylvinylsilyloxy-terminierten Dimethylsiloxan-Methylvinylsiloxan Copolymers, das 99.55 mol-% Dimethylsiloxyeinheiten und 0.45 mol-% Methylvinylsiloxyeinheiten enthält und einen Polymerisationsgrad von etwa 5500 Siloxyeinheiten aufweist, bis zur Homogenität vermischt.

100 Teile dieser Mischung werden auf einer Walze mit 0.025 Teilen Ethinylcyclohexanol als Inhibitor, 3 Teilen Vernetzer 3 und 1 Teil Katalysator 1 fertig gestellt. Zur Herstellung von Probekörpern wird die Zusammensetzung 15 min bei 170°C verpresst.

### Beispiel 5:

In einem Kneter werden 100 Teile der Basismischung 3 mit 160 Teilen unbehandeltem Aluminiumhydroxid (Martinal OL 104; Martinswerk GmbH, Bergheim/Deutschland) und 20 Teilen eines Dimethylvinylsilyloxy-terminierten Dimethylsiloxan-Methylvinylsiloxan Copolymers, das 99.55 mol-% Dimethylsiloxyeinheiten und 0.45 mol-% Methylvinylsiloxyeinheiten enthält und einen Polymerisationsgrad von etwa 5500 Siloxyeinheiten aufweist, bis zur Homogenität vermischt.

100 Teile dieser Mischung werden auf einer Walze mit 0.025 Teilen Ethinylcyclohexanol als Inhibitor, 3 Teilen Vernetzer 3 und 1 Teil Katalysator 1 fertig gestellt. Zur Herstellung von Probekörpern wird die Zusammensetzung 15 min bei 170°C verpresst.

### Beispiel 6:

In einem Kneter werden 100 Teile der Basismischung 3 mit 155 Teilen unbehandeltem Aluminiumhydroxid (Martinal OL 104; Martinswerk GmbH, Bergheim/Deutschland) und 20 Teilen eines Dimethylvinylsilyloxy-terminierten Dimethylsiloxan-Methylvinylsiloxan Copolymers, das 99.55 mol-% Dimethylsiloxyeinheiten und 0.45 mol-% Methylvinylsiloxyeinheiten enthält und einen Polymerisationsgrad von etwa 5500 Siloxyeinheiten aufweist, bis zur Homogenität vermischt.

100 Teile dieser Mischung werden auf einer Walze mit 0.025 Teilen Ethinylcyclohexanol als Inhibitor, 1 Teil Additiv 1, 3 Teilen Vernetzer 3 und 1 Teil Katalysator 1 fertig gestellt. Zur Herstellung von Probekörpern wird die Zusammensetzung 15 min bei 170°C verpresst.

### Beispiel 7 (nicht erfindungsgemäß):

In einem Kneter werden 100 Teile der Basismischung 3 mit 160 Teilen vinylsilan-behandeltem Aluminiumhydroxid (Martinal OL 104 S; Martinswerk GmbH, Bergheim/Deutschland) und 20 Teilen eines Dimethylvinylsilyloxy-terminierten Dimethylsiloxan-Methylvinylsiloxan Copolymers, das 99.55 mol-% Dimethylsiloxyeinheiten und 0.45 mol-% Methylvinylsiloxyeinheiten enthält und einen Polymerisationsgrad von etwa 5500 Siloxyeinheiten aufweist, bis zur Homogenität vermischt.

100 Teile dieser Mischung werden auf einer Walze mit 0.025 Teilen Ethinylcyclohexanol als Inhibitor, 3 Teilen Vernetzer 3 und 1 Teil Katalysator 1 fertig gestellt. Zur Herstellung von Probekörpern wird die Zusammensetzung 15 min bei 170°C verpresst.

### Beispiel 8 (nicht erfindungsgemäß):

In einem Kneter werden 100 Teile der Basismischung 2 mit 160 Teilen vinylsilan-behandeltem Aluminiumhydroxid (Hymod M 632 SL; J.M. Huber Corporation, Edison NJ/U.S.A.) und 1.2 Teilen eines Dimethylhydroxysiloxy-terminierten Dimethylsiloxan Oligomers mit einer Viskosität von 40 mPa.s und 0.8 Teilen Calciumstearat als Verarbeitungshilfe, bis zur Homogenität vermischt.

100 Teile dieser Mischung werden auf einer Walze mit 0.025 Teilen Ethinylcyclohexanol als Inhibitor, 1 Teil Additiv 1, 3 Teilen Vernetzer 3 und 1 Teil Katalysator 1 fertig gestellt. Zur Herstellung von Probekörpern wird die Zusammensetzung 15 min bei 170°C verpresst.

### Beispiel 9:

In einem Kneter werden 100 Teile der Basismischung 1 mit 140 Teilen unbehandeltem Aluminiumhydroxid (Apyral 40 CD; Nabaltec GmbH, Schwandorf/Deutschland), 1.5 Teilen Calciumstearat als Verarbeitungshilfe und 2.2 Teilen Additiv 2 bis zur Homogenität vermischt.

100 Teile dieser Mischung werden auf einer Walze mit 0.025 Teilen Ethinylcyclohexanol als Inhibitor, 1 Teil Additiv 1, 3 Teilen Vernetzer 3 und 1 Teil Katalysator 1 fertig gestellt. Zur Herstellung von Probekörpern wird die Zusammensetzung 15 min bei 170°C verpresst.

### Beispiel 10:

In einem Kneter werden 100 Teile der Basismischung 1 mit 140 Teilen unbehandeltem Aluminiumhydroxid (Micral 632; J.M. Huber Corporation, Edison NJ/U.S.A.) und 1.5 Teilen Calciumstearat als Verarbeitungshilfe bis zur Homogenität vermischt.

100 Teile dieser Mischung werden auf einer Walze mit 1.0 Teilen Vernetzer 2 und 1.0 Teilen Additiv 1 fertig gestellt. Zur Herstellung von Probekörpern wird die Zusammensetzung 15 min bei 170°C verpresst und anschließend 4 Stunden bei 150°C getempert.

### Beispiel 11:

In einem Kneter werden 100 Teile der Basismischung 1 mit 160 Teilen unbehandeltem Aluminiumhydroxid (Apyral 40 CD; Nabaltec GmbH, Schwandorf/Deutschland) und 1.0 Teilen Titandioxid bis zur Homogenität vermischt.

100 Teile dieser Mischung werden auf einer Walze mit 1.0 Teilen Vernetzer 2 und 1.5 Teilen Additiv 2 fertig gestellt. Zur Herstellung von Probekörpern wird die Zusammensetzung 15 min bei 170°C verpresst und anschließend 4 Stunden bei 150°C getempert.

### Beispiel 12:

In einem Kneter werden 100 Teile der Basismischung 3 mit 155 Teilen unbehandeltem Aluminiumhydroxid (Martinal OL 104; Martinswerk GmbH, Bergheim/Deutschland) und 0.5 Teilen eines Dimethylhydroxysiloxy-terminierten Dimethylsiloxan-Methylvinylsiloxan Copolymer-Oligomers mit einer Viskosität von 40 mPa.s und einem Methylvinylsiloxy-Gehalt von 10 mol-% und 0.8 Teilen Calciumstearat als Verarbeitungshilfe bis zur Homogenität vermischt.

100 Teile dieser Mischung werden auf einer Walze mit 1.0 Teilen Vernetzer 2 und 1.0 Teilen Additiv 1 fertig gestellt. Zur Herstellung von Probekörpern wird die Zusammensetzung 15 min bei 170°C verpresst und anschließend 4 Stunden bei 150°C getempert.

### Beispiel 13:

In einem Kneter werden 100 Teile der Basismischung 3 mit 155 Teilen unbehandeltem Aluminiumhydroxid (Martinal OL 104; Martinswerk GmbH, Bergheim/Deutschland), 20 Teilen eines Dimethylvinylsilyloxy-terminierten Dimethylsiloxan-Methylvinylsiloxan Copolymers, das 99.55 mol-% Dimethylsiloxyeinheiten und 0.45 mol-% Methylvinylsiloxyeinheiten enthält und einen Polymerisationsgrad von etwa 5500 Siloxyeinheiten aufweist, 0.5 Teilen eines Dimethylhydroxysiloxy-terminierten Dimethylsiloxan-Methylvinylsiloxan Copolymer-Oligomers mit einer Viskosität von 40 mPa·s und einem Methylvinylsiloxy-Gehalt von 10 mol-% und 0.8 Teilen Calciumstearat als Verarbeitungshilfe bis zur Homogenität vermischt.

100 Teile dieser Mischung werden auf einer Walze mit 0.025 Teilen Ethinylcyclohexanol als Inhibitor, 1 Teil Additiv 1, 3 Teilen Vernetzer 3 und 1 Teil Katalysator 2 fertig gestellt. Zur Herstellung von Probekörpern wird die Zusammensetzung 15 min bei 170°C verpresst.

### Beispiel 14:

In einem Kneter werden 100 Teile der Basismischung 3 mit 155 Teilen unbehandeltem Aluminiumhydroxid (Martinal OL 104; Martinswerk GmbH, Bergheim/Deutschland), 20 Teilen eines Dimethylvinylsilyloxy-terminierten Dimethylsiloxan-Methylvinylsiloxan Copolymers, das 99.55 mol-% Dimethylsiloxyeinheiten und 0.45 mol-% Methylvinylsiloxyeinheiten enthält und einen Polymerisationsgrad von etwa 5500 Siloxyeinheiten aufweist und 0.8 Teilen Calciumstearat als Verarbeitungshilfe bis zur Homogenität vermischt.

100 Teile dieser Mischung werden auf einer Walze mit.1 Teil Additiv 1, 2 Teilen Additiv 3, 3 Teilen Vernetzer 3 und 1 Teil Katalysator 2 fertig gestellt. Zur Herstellung von Probekörpern wird die Zusammensetzung 15 min bei 170°C verpresst.

### Beispiel 15 (nicht erfindungsgemäß):

In einem Kneter werden 100 Teile der Basismischung 3 mit 160 Teilen vinylsilan-behandeltem Aluminiumhydroxid (Martinal OL 104 S; Martinswerk GmbH, Bergheim/Deutschland), 20 Teilen eines Dimethylvinylsilyloxy-terminierten Dimethylsiloxan-Methylvinylsiloxan Copolymers, das 99.55 mol-% Dimethylsiloxyeinheiten und 0.45 mol-% Methylvinylsiloxyeinheiten enthält und einen Polymerisationsgrad von etwa 5500 Siloxyeinheiten aufweist, 0.5 Teilen eines Dimethylhydroxysiloxy-terminierten Dimethylsiloxan-Methylvinylsiloxan Copolymer-Oligomers mit einer Viskosität von 40 mPa.s und einem Methylvinylsiloxy-Gehalt von 10 mol-% und 0.8 Teilen Calciumstearat als Verarbeitungshilfe bis zur Homogenität vermischt.

100 Teile dieser Mischung werden auf einer Walze mit 0.025 Teilen Ethinylcyclohexanol als Inhibitor, 1 Teil Additiv 1, 3 Teilen Vernetzer 3 und 1 Teil Katalysator 2 fertig gestellt. Zur Herstellung von Probekörpern wird die Zusammensetzung 15 min bei 170°C verpresst.

### Beispiel 16 (nicht erfindungsgemäß):

In einem Kneter werden 100 Teile der Basismischung 3 mit 140 Teilen vinylsilan-behandeltem Aluminiumhydroxid (Martinal OL 104 S; Martinswerk GmbH, Bergheim/Deutschland), 20 Teilen eines Dimethylvinylsilyloxy-terminierten Dimethylsiloxan-Methylvinylsiloxan Copolymers, das 99.55 mol-% Dimethylsiloxyeinheiten und 0.45 mol-% Methylvinylsiloxyeinheiten enthält und einen Polymerisationsgrad von etwa 5500 Siloxyeinheiten aufweist, 0.5 Teilen eines Dimethylhydroxysiloxy-terminierten Dimethylsiloxan-Methylvinylsiloxan Copolymer-Oligomers mit einer Viskosität von 40 mPa.s und einem Methylvinylsiloxy-Gehalt von 10 mol-% und 0.8 Teilen Calciumstearat als Verarbeitungshilfe bis zur Homogenität vermischt.

100 Teile dieser Mischung werden auf einer Walze mit 1.0 Teilen Vernetzer 2 und 1.0 Teilen Additiv 1 fertig gestellt. Zur Herstellung von Probekörpern wird die Zusammensetzung 15 min bei 170°C verpresst und anschließend 4 Stunden bei 150°C getempert.

### Beispiel 17 (nicht erfindungsgemäß):

In einem Kneter werden 100 Teile der Basismischung 3 mit 160 Teilen vinylsilan-behandeltem Aluminiumhydroxid (Martinal OL 104 S; Martinswerk GmbH, Bergheim/Deutschland), 20 Teilen eines Dimethylvinylsilyloxy-terminierten Dimethylsiloxan-Methylvinylsiloxan Copolymers, das 99.55 mol-% Dimethylsiloxyeinheiten und 0.45 mol-% Methylvinylsiloxyeinheiten enthält und einen Polymerisationsgrad von etwa 5500 Siloxyeinheiten aufweist, 0.5 Teilen eines Dimethylhydroxysiloxy-terminierten Dimethylsiloxan-Methylvinylsiloxan Copolymer-Oligomers mit einer Viskosität von 40 mPa.s und einem Methylvinylsiloxy-Gehalt von 10 mol-% und 0.8 Teilen Calciumstearat als Verarbeitungshilfe bis zur Homogenität vermischt.

100 Teile dieser Mischung werden auf einer Walze mit 1.0 Teilen Vernetzer 2 fertig gestellt. Zur Herstellung von Probekörpern wird die Zusammensetzung 15 min bei 170°C verpresst und anschließend 4 Stunden bei 150°C getempert.

Die Messung der Shore Härten erfolgte nach DIN 53505-A an 6 mm dicken Probekörpern. Die Messung der Reißfestigkeiten und Reißdehnungen erfolgte nach DIN 53504 an 2 mm dicken S1 Schulterstäben. Die Messung der Weiterreißwiderstände erfolgte nach ASTM D 624 B an 2 mm dicken Probekörpern. Die Messung der Anspringtemperaturen erfolgte nicht-isotherm nach DIN 53529-A3. Die Messung der T 50 Werte erfolgte isotherm bei 150°C nach DIN 53529-A3. Die Ergebnisse dieser Messungen sind in Tabelle 1 zusammengefasst.

**Tabelle 1**

| **Beispiel** | **Härte [Shore A]** | **Reißfestigkeit [N/mm²]** | **Reißdehnung [%]** | **Weiterreißfestigkeit [N/mm]** |
|---|---|---|---|---|
| **1** | 67 | 2.0 | 387 | 10.1 |
| **2** | 76 | 3.7 | 181 | 14.9 |
| **3** | 69 | 2.4 | 361 | 11.5 |
| **4** | 78 | 3.9 | 161 | 16.4 |
| **5** | 79 | 4.4 | 169 | 17.1 |
| **6** | 77 | 4.3 | 175 | 16.9 |
| **7** | 74 | 3.9 | 191 | 15.2 |
| **8** | 67 | 2.5 | 528 | 10.8 |
| **9** | 68 | 2.9 | 165 | 15.4 |
| **10** | 71 | 2.2 | 384 | 11.2 |
| **11** | 74 | 2.8 | 371 | 10.3 |
| **12** | 79 | 3.1 | 505 | 14.9 |
| **13** | 75 | 3.9 | 160 | 15.1 |
| **14** | 78 | 4.4 | 181 | 16.3 |
| **15** | 72 | 4.1 | 201 | 15.4 |
| **16** | 70 | 2.9 | 395 | 11.9 |
| **17** | 74 | 2.4 | 370 | 9.5 |

Die Prüfung der Durchschlagfestigkeit erfolgte nach: DIN IEC 243-2. Die Prüfung des spezifischen Durchgangswiderstands erfolgte nach DIN IEC 93. Die Prüfung der Hochspannungs-Lichtbogenfestigkeit erfolgte nach DIN VDE 0441 Teil 1. Die Prüfung der Hochspannungs-Kriechstromfestigkeit erfolgte nach DIN IEC 587 (VDE 0303 Teil 10). Die diesbezüglichen Ergebnisse zeigt Tabelle 2.

**Tabelle 2**

| **Beispiel** | **Durchschlagsfestigkeit [kV/mm]** | **Spez. Durch gangswiderstand [Ω•cm]** | **Hochspannungs-Lichtbogenfestigkeit [s]** | **Hochspannungs-Kriechstromfestigkeit** |
|---|---|---|---|---|
| **7** | 21 | 1.19•10¹⁵ | 316 | 1 A 4.5 |
| **16** | 19 | 8.95•10¹⁴ | 312 | 1 A 4.5 |
| **17** | 22 | 5.77•10¹⁴ | 371 | 1 A 4.5 |
| **9** | 22 | 1.27•10¹⁵ | 325 | 1 A 4.5 |
| **11** | 22 | 7.83•10¹⁴ | 343 | 1 A 4.5 |

Die elektrische Prüfung nach Kochen erfolgte nach Lagerung über 100 Stunden in deionisiertem Wasser mit 0.1 %igem Zusatz von NaCl bei einer Probendicke von 3 mm. Die Prüfungsergebnisse fasst Tabelle 3 zusammen.

**Tabelle 3**

| **Beispiel** | **Durchschlagfestigkeit [kV/mm]** | | **Dielektrizitätskonstante ε** | | **Verlustfaktor tan δ** | |
|---|---|---|---|---|---|---|
| | **vor Kochen** | **nach Kochen** | **vor Kochen** | **nach Kochen** | **vor Kochen** | **nach Kochen** |
| **7** | 13.3 | 12.4 | 3.6 | 4.3 | 0.006 | 0.085 |
| **17** | 12.9 | 13.2 | 3.7 | 4.4 | 0.007 | 0.059 |
| **9** | 13.2 | 12.5 | 3.7 | 4.7 | 0.006 | 0.089 |
| **11** | 12.5 | 11.8 | 3.7 | 4.8 | 0.006 | 0.073 |

## Patentansprüche

1. Siliconkautschukzusammensetzungen für Hochspannungsisolatoren, enthaltend
(A) 100 Gewichtsteile von mindestens einem Diorganopolysiloxan mit der allgemeinen Formel (1):
Rₐ¹R_{b}²SiO_{(4-a-b) /2} (1)
wobei
R¹ einen unsubstituierten oder halogensubstituierten einwertigen Kohlenwasserstoffrest mit 1 bis 20 Kohlenstoffatomen, der frei von aliphatisch ungesättigten Gruppen ist,
R² einen unsubstituierten oder halogensubstituierten einwertigen Kohlenwasserstoffrest, der aliphatisch ungesättigt ist, jedes Molekül im Durchschnitt mindestens zwei solche an Siliciumatome gebundene ungesättigte Gruppen aufweist und
a, b unabhängig von einander positive Zahlen
bedeuten,
mit der Maßgabe, dass 1 ≤ a < 3, 0 < b ≤ 1 und 1 < a + b ≤ 3 ist,
(B) 1 - 100 Gewichtsteile, bezogen auf 100 Gewichtsteile (A), hochdisperse Kieselsäure mit einer spezifischen Oberfläche, gemessen mit der BET Methode, von 50 - 400 m²/g, und einem Q4-Anteil an SiO_{4/2} Einheiten bezogen auf die Summe aus Q4, Q3 und Q2 von mindestens 80 %,
(C) 50 - 300 Gewichtsteile, bezogen auf 100 Gewichtsteile (A) mindestens einem nicht durch einen Vorbehandlungsschritt oberflächenmodifizierten Aluminiumhydroxidpulver mit einer spezifischen Oberfläche, gemessen nach der BET Methode, von 0.1 - 20 m²/g und einer durchschnittlichen Partikelgröße von 0.05 - 20 µm,
(D) Vernetzungsmittel in einer Menge, die ausreicht, um die Zusammensetzung zu härten, wobei dieses Vernetzungsmittel ausgewählt wird aus der Gruppe enthaltend
organisches Peroxid, Hydroperoxid oder eine Mischung aus verschiedenen organischen Peroxiden oder Hydroperoxiden
oder
eine Kombination aus einem Organohydrogenpolysiloxan mit der allgemeinen Formel (2)
R_{c}³H_{d}SiO_{(4-c-d)/2} (2)
wobei
R³ einen substituierten oder unsubstituierten einwertigen Kohlenwasserstoffrest, der nicht aliphatisch ungesättigt ist, mit der Maßgabe, dass jedes Molekül im Durchschnitt mindestens drei solche an Siliciumatome gebundene Wasserstoffatome aufweist, und
c,d unabhängig von einander positive Zahlen
bedeuten,
mit der Maßgabe, dass 1 ≤ c < 3, 0 < d ≤ 1 und 1 < c + d ≤ 3 ist,
und
einem zumindest ein Übergangsmetall enthaltenden Hydrosilylierungskatalysator,
mit der Maßgabe, dass der vernetzte Kautschuk Reißdehnungen von mindestens 100 %, Reißfestigkeiten von mindestens 2 N/mm² und Weiterreißwiderstände von mindestens 10 N/mm aufweist.

2. Siliconkautschukzusammensetzung gemäß Anspruch 1, **dadurch gekennzeichnet, dass** (D) ein organisches Peroxid, Hydroperoxid oder eine Mischung aus verschiedenen organischen Peroxiden oder Hydroperoxiden ist.

3. Siliconkautschukzusammensetzung gemäß Anspruch 1, **dadurch gekennzeichnet, dass** (D)eine Kombination aus einem Organohydrogenpolysiloxan mit der allgemeinen Formel (2):
R_{c}³H_{d}SiO_{(4-c-d)/2} (2),
wobei
R³ ein substituierter oder unsubstituierter einwertiger. Kohlenwasserstoffrest ist, der nicht aliphatisch ungesättigt ist, jedes Molekül im Durchschnitt mindestens drei solche an Siliciumatome gebundene Wasserstoffatome aufweist,
c,d unabhängig von einander positive Zahlen
bedeuten,
mit der Maßgabe, dass 1 ≤ c < 3, 0 < d ≤ 1 und 1 < c + d ≤ 3 ist,
und
einem zumindest ein Übergangsmetall enthaltenen Hydrosilylierungskatalysator ist.

4. Siliconkautschukzusammensetzung gemäß Anspruch 3, **dadurch gekennzeichnet, dass** der Hydrosilylierungskatalysator ausgewählt wird aus der Gruppe bestehend aus Verbindungen der Formel (5) 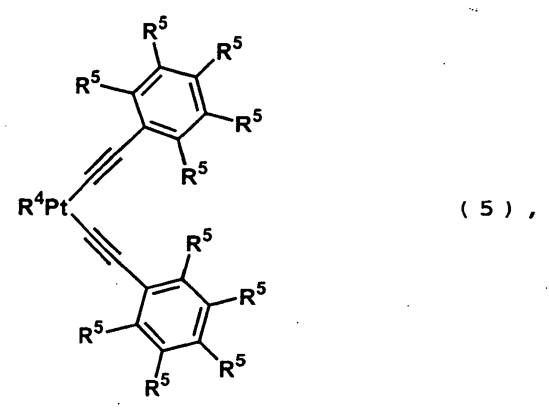 oligomeren oder polymeren Verbindungen, die aus Struktureinheiten der allgemeinen Formel (6) 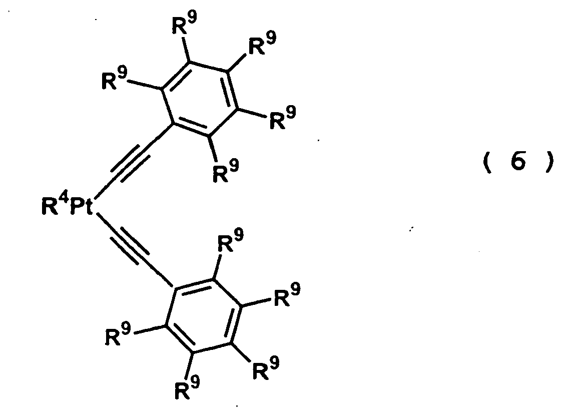 und gegebenenfalls Struktureinheiten der allgemeinen Formel (7)
R¹¹ ᵣSiO_{(4-r)/2} (7)
zusammengesetzt sind,
wobei
**R⁴** ein gegebenenfalls substituiertes Dien bedeutet, das durch mindestens eine π-Bindung mit Platin verbunden ist und eine unverzweigte oder eine verzweigte Kette mit 4 bis 18 Kohlenstoffatomen oder einen cyclischen Ring mit 6 bis 28 Kohlenstoffatomen darstellt,
**R⁵** gleich oder verschieden sein kann und Wasserstoffatom, Halogenatom, -SiR⁶ ₃, -OR⁸ oder einwertige, gegebenenfalls substituierte Kohlenwasserstoffreste mit 1 bis 24 Kohlenstoffatomen bedeutet, mit der Maßgabe, dass in den Verbindungen der Formel (5) mindestens ein Rest R⁵ die Bedeutung von -SiR⁶ ₃ hat.
**R⁶** gleich oder verschieden sein kann und Wasserstoff, Halogenatom, -OR⁸ oder einwertige, gegebenenfalls substituierte Kohlenwasserstoffreste mit 1 bis 24 Kohlenstoffatomen bedeutet,
**R⁸** gleich oder verschieden sein kann und Wasserstoffatom, -SiR⁶ ₃ oder ein einwertiger gegebenenfalls substituierter Kohlenwasserstoffrest mit 1 bis 20 Kohlenstoffatomen ist,
**R⁹** gleich oder verschieden sein kann und Wasserstoffatom, Halogenatom, -SiR⁶ ₃, -SiR⁶ ₍₃₋ₜ₎ [R¹⁰SiR¹¹ ₛO_{(3-s)/2}]ₜ, -OR⁸ oder einwertige, gegebenenfalls substituierte Kohlenwasserstoffreste mit 1 bis 24 Kohlenstoffatomen bedeutet, mit der Maßgabe, dass in Formel (6) mindestens ein Rest R⁹ die Bedeutung von -SiR⁶ ₍₃₋ₜ₎[R¹⁰SiR¹¹ ₛO_{(3-s)/2}]ₜ hat,
**R¹⁰** gleich oder verschieden sein kann und Sauerstoff oder zweiwertige, gegebenenfalls substituierte Kohlenwasserstoffreste mit 1 bis 24 Kohlenstoffatomen, die über Sauerstoffatom an das Silicium gebunden sein können, bedeutet,
**R¹¹** gleich oder verschieden sein kann und Wasserstoff oder einen organischen Rest bedeutet,
**r** 0, 1, 2 oder 3 ist,
**s** 0, 1, 2 oder 3 bedeutet und
**t** 1, 2 oder 3 ist.

5. Siliconkautschukzusammensetzung gemäß Anspruch 4, **dadurch gekennzeichnet, dass** der Hydrosilylierungskatalysator ausgewählt wird aus der Gruppe bestehend aus Bis(alkinyl)(1,5-cyclooctadien)platin-, Bis(alkinyl)(bicyclo[2.2.1]hepta-2,5-dien)platin-, Bis(alkinyl)(1,5-dimethyl-1,5-cyclooctadien)platin- und Bis(alkinyl)(1,6-dimethyl-1,5-cyclooctadien)platin-Komplexe.

6. Siliconkautschukzusammensetzung gemäß einem der Ansprüche 1 bis 5, **dadurch gekennzeichnet, dass** die Komponente (B) mit Siliciumverbindungen oder hydroxy-terminierten Diorganosiloxan-Oligomeren oberflächenbehandelt ist, wobei der Anteil dieser Siliciumverbindungen oder hydroxy-terminierten Diorganosiloxan-Oligomeren, der ungesättigte Gruppen enthält, mindestens 10% liegt.

7. Siliconkautschukzusammensetzung gemäß einem der Ansprüche 1, 3, 4, 5 oder 6, **dadurch gekennzeichnet, dass** die Siliconkautschukzusammensetzung zusätzlich einen Inhibitor enthält.

8. Siliconkautschukzusammensetzung gemäß einem der Ansprüche 1 bis 7, **dadurch gekennzeichnet, dass** die Siliconkautschukzusammensetzung zusätzlich ein oder mehrere Metalloxide enthält.

9. Siliconkautschukzusammensetzung gemäß einem der Ansprüche 1 bis 8, **dadurch gekennzeichnet, dass** die Siliconkautschukzusammensetzung zusätzlich eine Platinverbindung oder einen Platinkomplex oder das Umsetzungsprodukt einer Platinverbindung oder eines Platinkomplexes mit einer Organosiliciumverbindung, die über Kohlenstoff an das Silicium gebundenen basischen Stickstoff aufweist, enthält.

10. Siliconkautschukzusammensetzung gemäß Anspruch 9, **dadurch gekennzeichnet, dass** die Organosiliciumverbindung; die über Kohlenstoff an das Silicium gebundenen basischen Stickstoff aufweist, ausgewählt ist aus der Gruppe der Verbindungen, bestehend aus N-(2-Aminoethyl)-3-aminopropyltrimethoxysilan, N-(2-Aminoethyl)-3-aminopropyltriethoxysilan , 3-Aminopropyltrimethoxysilan und 3-Aminopropyltriethoxysilan.

11. Siliconkautschukzusammensetzung gemäß Anspruch 9 oder 10, **dadurch gekennzeichnet, dass** die Organosiliciumverbindung einen Stickstoffgehalt im Bereich von 15 ppm bis 500 ppm aufweist.

12. Siliconkautschukzusammensetzung gemäß einem der Ansprüche 1 bis 11, **dadurch gekennzeichnet, dass** die Siliconkautschukzusammensetzung weitere Füllstoffe enthält.

13. Verfahren zur Herstellung einer Siliconkautschukzusammensetzung gemäß einem der Ansprüche 1 bis 12, **dadurch gekennzeichnet, dass** die Bestandteile durch Mischen in einem Mischaggregat hergestellt werden.

14. Verfahren nach Anspruch 13, **dadurch gekennzeichnet, dass** die Bestandteile (A), (B) und (C) sowie gegebenenfalls (E), (F) und (G) in einem Kneter gegebenenfalls unter Zufuhr von Wärme vermischt werden und das so erhaltene Vorprodukt auf einem Walzwerk mit dem Bestandteil (D) fertig gestellt wird.

15. Verwendung der Siliconkautschukzusammensetzung gemäß einem der Ansprüche 1 bis 12 zur Herstellung von Hochspannungsisolatoren oder schwerbrennbaren Kabelummantelungen.

16. Siliconkautschuk erhältlich durch Vernetzung der Siliconkautschukzusammensetzung gemäß einem der Ansprüche 1 bis 12.

## Claims

1. Silicone rubber composition for high-voltage insulators, comprising
(A) 100 parts by weight of at least one diorganopolysiloxane having the general formula (1):
Rₐ¹R_{b}²SiO_{(4-a-b)/2} (1)
in which
R¹ is an unsubstituted or halogen-substituted monovalent hydrocarbon radical having 1 to 20 carbon atoms which is free of aliphatically unsaturated groups,
R² is an unsubstituted or halogen-substituted monovalent hydrocarbon radical which is aliphatically unsaturated, each molecule on average having at least two such unsaturated groups bonded to silicon atoms, and
a, b, independently of one another, are positive numbers
with the proviso that 1 ≤ a < 3, 0 < b ≤ 1 and 1 < a + b ≤ 3,
(B) 1 - 100 parts by weight, based on 100 parts by weight of (A), of finely divided silica having a specific surface area, measured by the BET method, of 50 - 400 m²/g and a Q4 fraction of SiO_{4/2} units, based on the sum of Q4, Q3 and Q2, of at least 80%,
(C) 50 - 300 parts by weight, based on 100 parts by weight (A), of at least one aluminum hydroxide powder not surface-modified by a pretreatment step and having a specific surface area, measured according to the BET method, of 0.1 - 20 m²/g and an average particle size of 0.05 - 20 *µ*m,
(D) a crosslinking agent in an amount which is sufficient to cure the composition, this crosslinking agent being selected from the group consisting of
an organic peroxide or hydroperoxide or a mixture of different organic peroxides or hydroperoxides
or
a combination of an organohydrogenpolysiloxane having the general formula (2)
R_{c}³H_{d}SiO_{(4-c-d)/2} (2)
in which
R³ is a substituted or unsubstituted monovalent hydrocarbon radical which is not aliphatically unsaturated, with the proviso that each molecule has on average at least three such hydrogen atoms bonded to silicon atoms, and
c, d, independently of one another, are positive numbers,
with the proviso that 1 ≤ c < 3, 0 < d ≤ 1 and 1 < c + d ≤ 3,
and
a hydrosilylation catalyst containing at least one transition metal,
with the proviso that the crosslinked rubber has elongations at break of at least 100%, tensile strengths of at least 2 N/mm² and tear propagation resistances of at least 10 N/mm.

2. Silicone rubber composition according to claim 1, **characterized in that** (D) is an organic peroxide or hydroperoxide or a mixture of different organic peroxides or hydroperoxides.

3. Silicone rubber composition according to claim 1, **characterized in that** (D) is a combination of an organohydrogenpolysiloxane having the general formula (2):
R_{c}³H_{d}SiO_{(4-c-d)/2} (2),
in which
R³ is a substituted or unsubstituted monovalent hydrocarbon radical which is not aliphatically unsaturated, and each molecule has on average at least three such hydrogen atoms bonded to silicon atoms,
c, d, independently of one another, are positive numbers,
with the proviso that 1 ≤ c < 3, 0 < d ≤ 1 and 1 < c + d ≤ 3,
and
a hydrosilylation catalyst containing at least one transition metal.

4. Silicone rubber composition according to claim 3, **characterized in that** the hydrosilylation catalyst is selected from the group consisting of compounds of the formula (5) 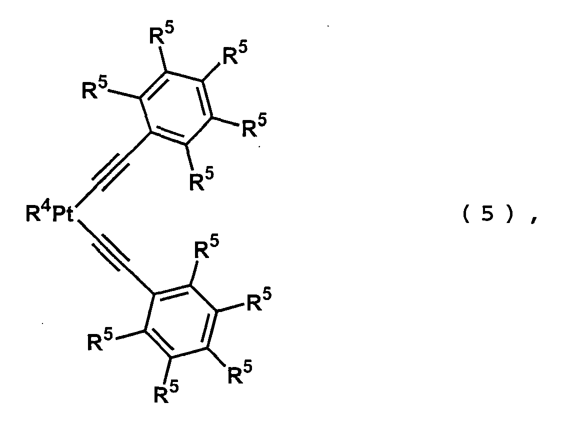 oligomeric or polymeric compounds which are composed of structural units of the general formula (6) 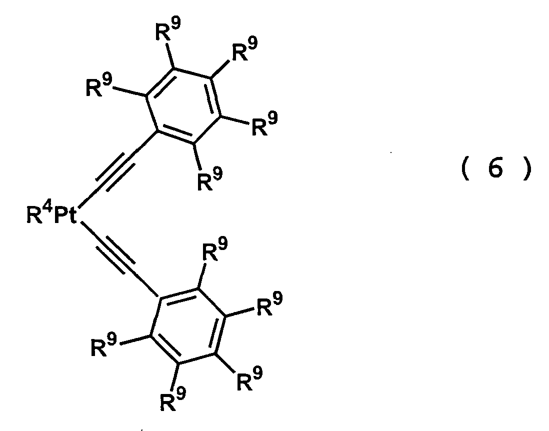 and optionally structural units of the general formula (7)
R¹¹ ᵣSiO_{(4-r)/2} (7)
in which
**R⁴** is an optionally substituted diene which is linked to platinum by at least one π-bond and is a straight or a branched chain having 4 to 18 carbon atoms or a cyclic ring having 6 to 28 carbon atoms,
**R⁵** may be identical or different and is a hydrogen atom, a halogen atom, -SiR⁶ ₃, -OR⁸ or monovalent, optionally substituted hydrocarbon radicals having 1 to 24 carbon atoms, with the proviso that, in the compounds of the formula (5), at least one radical R⁵ is -SiR⁶ ₃,
**R⁶** may be identical or different and is hydrogen, a halogen atom, -OR⁸ or monovalent, optionally substituted hydrocarbon radicals having 1 to 24 carbon atoms,
**R⁸** may be identical or different and is a hydrogen atom, -SiR⁶ ₃ or a monovalent optionally substituted hydrocarbon radical having 1 to 20 carbon atoms,
**R⁹** may be identical or different and is a hydrogen atom, a halogen atom, -SiR⁶ ₃, -SiR⁶ ₍₃₋ₜ₎[R¹⁰SiR¹¹ ₛO_{(3-s)/2}]t, -OR⁸ or monovalent, optionally substituted hydrocarbon radicals having 1 to 24 carbon atoms, with the proviso that, in formula (6), at least one radical R⁹ is -SiR⁶ ₍₃₋ₜ₎ [R¹⁰SiR¹¹ ₛO_{(3-s)/2}]ₜ,
**R¹⁰** may be identical or different and is oxygen or divalent, optionally substituted hydrocarbon radicals having 1 to 24 carbon atoms, which may be bonded to the silicon via an oxygen atom,
**R¹¹** may be identical or different and is hydrogen or an organic radical,
r is 0, 1, 2 or 3,
**s** is 0, 1, 2 or 3 and
t is 1, 2 or 3.

5. Silicone rubber composition according to claim 4, **characterized in that** the hydrosilylation catalyst is selected from the group consisting of bis(alkynyl)(1,5-cyclooctadiene)platinum, bis(alkynyl)(bicyclo[2.2.1]hepta-2,5-diene)platinum, bis (alkynyl) (1,5-dimethyl-1,5-cyclooctadiene)platinum and bis(alkynyl)(1,6-dimethyl-1,5-cyclooctadiene)platinum complexes.

6. Silicone rubber composition according to any of claims 1 to 5, **characterized in that** the component (B) is surface-treated with silicon compounds or hydroxyl-terminated diorganosiloxane oligomers, the proportion of these silicon compounds or hydroxyl-terminated diorganosiloxane oligomers which contain unsaturated groups being at least 10%.

7. Silicone rubber composition according to any of claims 1, 3, 4, 5 and 6, **characterized in that** the silicone rubber composition additionally contains an inhibitor.

8. Silicone rubber composition according to any of claims 1 to 7, **characterized in that** the silicone rubber composition additionally contains one or more metal oxides.

9. Silicone rubber composition according to any of claims 1 to 8, **characterized in that** the silicone rubber composition additionally contains a platinum compound or a platinum complex or the reaction product of a platinum compound or a platinum complex with an organosilicon compound which has basic nitrogen bonded to the silicon via carbon.

10. Silicone rubber composition according to claim 9, **characterized in that** the organosilicon compound which has basic nitrogen bonded to the silicon via carbon is selected from the group of compounds consisting of N-(2-aminoethyl)-3-aminopropyltrimethoxysilane, N-(2-aminoethyl)-3-aminopropyltriethoxysilane, 3-aminopropyltrimethoxysilane and 3-aminopropyltriethoxysilane.

11. Silicone rubber composition according to claim 9 or 10, **characterized in that** the organosilicon compound has a nitrogen content in the range from 15 ppm to 500 ppm.

12. Silicone rubber composition according to any of claims 1 to 11, **characterized in that** the silicone rubber composition contains further fillers.

13. Process for the preparation of a silicone rubber composition according to any of claims 1 to 12, **characterized in that** the components are prepared by mixing in a mixing unit.

14. Process according to claim 13, **characterized in that** the components (A), (B) and (C), and optionally (E), (F) and (G) are mixed in a kneader, optionally with supply of heat, and the precursor thus obtained is completed with the component (D) on a roll mill.

15. Use of the silicone rubber composition according to any of claims 1 to 12 for the production of high-voltage insulators or flame-retardant cable sheaths.

16. Silicone rubber obtainable by crosslinking the silicone rubber composition according to any of claims 1 to 12.

## Revendications

1. Compositions de caoutchouc siliconé pour isolateurs haute tension, contenant
(A) 100 parties en poids d'au moins un diorganopolysiloxane de la formule générale (1) :
Rₐ¹R_{b}²SiO_{(4-a-b)/2} (1)
dans laquelle
R¹ représente un radical hydrocarboné monovalent non substitué ou substitué par de l'halogène et comportant de 1 à 20 atomes de carbone, et qui est exempt de groupes aliphatiquement insaturés,
R² représente un radical hydrocarboné monovalent non substitué ou substitué par de l'halogène, et qui est aliphatiquement insaturé, chaque molécule présentant en moyenne au moins deux de ces groupes insaturés liés à des atomes de silicium et
a, b représentent indépendamment l'un de l'autre des nombres entiers,
à la condition que 1 ≤ a < 3, 0 < b ≤ 1 et 1 < a + b ≤ 3,
(B) de 1 à 100 parties en poids, par rapport à 100 parties en poids de (A), d'acide silicique hautement dispersé d'une surface spécifique, mesurée par la méthode BET, de 50 à 400 m²/g, et une fraction Q4 d'unités SiO_{4/2} par rapport à la somme de Q4, Q3 et Q2 d'au moins 80%,
(C) de 50 à 300 parties en poids, par rapport à 100 parties en poids de (A), d'au moins une poudre d'hydroxyde d'aluminium non modifiée en surface par une étape de prétraitement et ayant une surface spécifique, mesurée par la méthode BET, de 0,1 à 20 m²/g et une taille moyenne de particules de 0,05 à 20 *µ*m,
(D) un agent réticulant en une quantité suffisante pour durcir la composition, cet agent réticulant étant choisi dans le groupe contenant
un peroxyde organique, un hydroperoxyde ou un mélange de différents peroxydes organiques ou hydroperoxydes,
ou
une combinaison d'un organohydrogénopolysiloxane de la formule générale (2)
R_{c}³H_{d}SiO_{(4-c-d)/2} (2)
dans laquelle
R³ représente un radical hydrocarboné monovalent substitué ou non substitué, qui n'est pas aliphatiquement insaturé, à la condition que chaque molécule présente en moyenne au moins trois tels atomes d'hydrogène liés à des atomes de silicium, et
c, d représentent indépendamment l'un de l'autre des nombres positifs,
à la condition que 1 ≤ c < 3, 0 < d ≤ 1 et 1 < c + d ≤ 3,
et
un catalyseur d'hydrosilylation contenant au moins un métal de transition,
à la condition que le caoutchouc réticulé présente des allongements de rupture d'au moins 100%, des résistances au déchirement d'au moins 2 N/mm² et des résistances à la propagation du déchirement d'au moins 10 N/mm.

2. Composition de caoutchouc siliconé suivant la revendication 1, **caractérisée en ce que** (D) est un peroxyde organique, un hydroperoxyde ou un mélange de différents peroxydes organiques ou hydroperoxydes.

3. Composition de caoutchouc siliconé suivant la revendication 1, **caractérisée en ce que** (D) est une combinaison d'un organohydrogénopolysiloxane de la formule générale (2) :
R_{c}³H_{d}SiO_{(4-c-d)/2} (2)
dans laquelle
R³ représente un radical hydrocarboné monovalent substitué ou non substitué, qui n'est pas aliphatiquement insaturé, où chaque molécule présente en moyenne au moins trois tels atomes d'hydrogène liés à des atomes de silicium,
c,d représentent indépendamment l'un de l'autre des nombres positifs,
à la condition que 1 ≤ c < 3, 0 < d ≤ 1 et 1 < c + d ≤ 3,
et
d'un catalyseur d'hydrosilylation contenant au moins un métal de transition.

4. Composition de caoutchouc siliconé suivant la revendication 3, **caractérisée en ce que** le catalyseur d'hydrosilylation est choisi dans le groupe consistant en des composés de la formule (5) 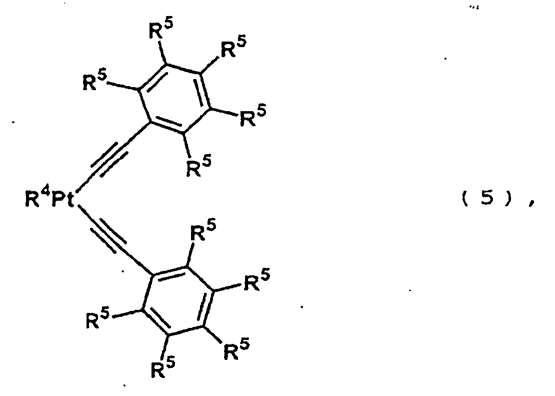 des composés oligomères ou polymères, composés d'unités structurelles de la formule générale (6) 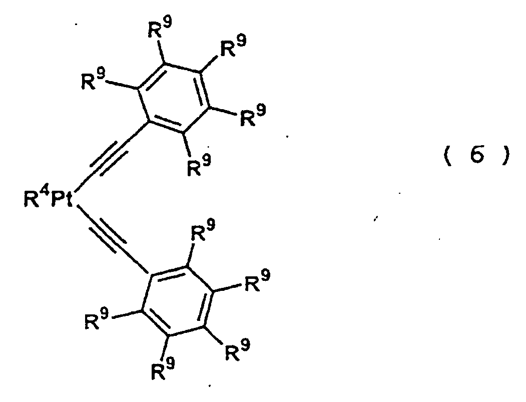 et le cas échéant d'unités structurelles de la formule générale (7)
R¹¹ ᵣSiO_{(4-r)/2} (7)
où
R⁴ représente un diène le cas échéant substitué, lié par au moins une liaison π à du platine, et formant une chaîne non ramifiée ou ramifiée comportant de 4 à 18 atomes de carbone ou un noyau cyclique comportant de 6 à 28 atomes de carbone,
R⁵ peuvent être identiques ou différents et représentent un atome d'hydrogène, un atome d'halogène, -SiR⁶ ₃, -OR⁸ ou un radical hydrocarboné monovalent, le cas échéant substitué et comportant de 1 à 24 atomes de carbone, à la condition que, dans les composés de la formule (5), au moins un radical R⁵ représente -SiR⁶ ₃,
R⁶ peuvent être identiques ou différents et représentent de l'hydrogène, un atome d'halogène, -OR⁸ ou des radicaux hydrocarbonés monovalents, le cas échéant substitués, comportant de 1 à 24 atomes de carbone,
R⁸ peuvent être identiques ou différents et représentent un atome d'hydrogène, -SiR⁶ ₃ ou un radical hydrocarboné monovalent le cas échéant substitué et comportant de 1 à 20 atomes de carbone,
R⁹ peuvent être identiques ou différents et représentent un atome d'hydrogène, un atome d'halogène, -SiR⁶ ₃, -SiR⁶ ₍₃₋ₜ₎[R¹⁰SiR¹¹ ₛO_{(3-s)/2}]ₜ, -OR⁸ ou des radicaux hydrocarbonés monovalents le cas échéant substitués et comportant de 1 à 24 atomes de carbone, à la condition que, dans la formule (6), au moins un radical R⁹ représente -SiR⁶ ₍₃₋ₜ₎ [R¹⁰SiR¹¹ ₛO_{(3-s)/2}]_{t,}
R¹⁰ peuvent être identiques ou différents et représentent de l'oxygène ou des radicaux hydrocarbonés divalents, le cas échéant substitués et comportant de 1 à 24 atomes de carbone, qui peuvent être liés au silicium via un atome d'oxygène,
R¹¹ peuvent être identiques ou différents et représentent de l'hydrogène ou un radical organique,
r vaut 0, 1, 2 ou 3,
s vaut 0, 1, 2 ou 3, et
t vaut 1, 2 ou 3.

5. Composition de caoutchouc siliconé suivant la revendication 4, **caractérisée en ce que** le catalyseur d'hydrosilylation est choisi dans le groupe composé de complexes de bis-(alcynyl)(1,5-cyclooctadiène)platine, de bis(alcynyl)(bicyclo[2.2.1]hepta-2,5-diène)platine, de bis (alcynyl)(1,5-diméthyl-1,5-cyclooctadiène)-platine et de bis(alcynyl)(1,6-diméthyl-1,5-cyclooctadiène)platine.

6. Composition de caoutchouc siliconé suivant l'une quelconque des revendications 1 à 5, **caractérisée en ce que** le composant (B) est traité en surface avec des composés de silicium ou des diorganosiloxanes oligomères à terminaison hydroxy, la fraction de ces composés de silicium ou de ces diorganosiloxanes oligomères à terminaison hydroxy, contenant des groupes insaturés, est d'au moins 10%.

7. Composition de caoutchouc siliconé suivant l'une quelconque des revendications 1, 3, 4, 5 ou 6, **caractérisée en ce que** la composition de caoutchouc siliconé contient en outre un inhibiteur.

8. Composition de caoutchouc siliconé suivant l'une quelconque des revendications 1 à 7, **caractérisée en ce que** la composition de caoutchouc siliconé contient en outre un ou plusieurs oxydes métalliques.

9. Composition de caoutchouc siliconé suivant l'une quelconque des revendications 1 à 8, **caractérisée en ce que** la composition de caoutchouc siliconé contient en outre un composé de platine ou un complexe de platine, ou le produit de réaction d'un composé de platine ou d'un complexe de platine avec un composé organosilicique, qui présente de l'azote basique lié au silicium par l'intermédiaire de carbone.

10. Composition de caoutchouc siliconé suivant la revendication 9, **caractérisée en ce que** le composé organosilicique, qui présente de l'azote basique lié au silicium par l'intermédiaire de carbone, est choisi dans le groupe des composés consistant en N-(2-aminoéthyl)-3-aminopropyltriméthoxysilane, N-(2-aminoéthyl)-3-aminopropyltriéthoxysilane, 3-aminopropyltriméthoxysilane et 3-aminopropyltriéthoxysilane.

11. Composition de caoutchouc siliconé suivant la revendication 9 ou 10, **caractérisée en ce que** le composé organosilicique présente une teneur en azote de l'ordre de 15 ppm à 500 ppm.

12. Composition de caoutchouc siliconé suivant l'une quelconque des revendications 1 à 11, **caractérisée en ce que** la composition de caoutchouc siliconé contient d'autres charges.

13. Procédé de préparation d'une composition de caoutchouc siliconé suivant l'une quelconque des revendications 1 à 12, **caractérisé en ce que** les constituants sont préparés par mélange dans un appareil mélangeur.

14. Procédé suivant la revendication 13, **caractérisé en ce que** les constituants (A), (B) et (C) ainsi que le cas échéant (E), (F) et (G) sont mélangés dans un malaxeur avec un éventuel apport de chaleur et que le demi-produit ainsi obtenu est achevé sur un laminoir avec le constituant (D).

15. Utilisation d'une composition de caoutchouc siliconé suivant l'une quelconque des revendications 1 à 12 pour la préparation d'isolateurs haute tension ou de gaines de câbles difficilement inflammables.

16. Caoutchouc siliconé que l'on peut obtenir par réticulation de la composition de caoutchouc siliconé suivant l'une quelconque des revendications 1 à 12.
